**Europäisches Patentamt**

(19) **European Patent Office**

**Office européen des brevets**

(11) Publication number: **0 100 679**

**B1**

(12) **EUROPEAN PATENT SPECIFICATION**

(45) Date of publication of patent specification: **01.10.86**

(21) Application number: **83304459.7**

(22) Date of filing: **02.08.83**

(51) Int. Cl.⁴: **H 04 N 9/64,** H 04 N 11/06, H 03 H 15/00

(54) Reduced data rate signal separation system.

(30) Priority: **04.08.82 US 405031**
**04.08.82 US 405165**

(43) Date of publication of application:
**15.02.84 Bulletin 84/07**

(45) Publication of the grant of the patent:
**01.10.86 Bulletin 86/40**

(84) Designated Contracting States:
**AT DE FR GB IT**

(56) References cited:
**DE-A-3 028 705**
**GB-A-1 595 780**
**US-A-4 096 516**
**US-A-4 218 700**

**IEEE Journal of Solid-State Circuits, vol. SC-16, no. 3, June 1981, New York, H.J.M.VEENDRICK "An NMOS Dual-Mode Digital Low-Pass Filter for color TV", pages 179-182**

(73) Proprietor: **RCA CORPORATION**
**201 Washington Road**
**Princeton, NJ 08540 (US)**

(72) Inventor: **Lewis, Henry Garton, Jr.**
**3 Catawba Drive**
**Hamilton Square New Jersey (US)**
Inventor: **Balaban, Alvin Reuben**
**R.D. 1, Fawn Drive**
**Lebanon New Jersey (US)**
Inventor: **Bolger, Thomas Vincent**
**110 Morris Street**
**Camden New Jersey (US)**
Inventor: **Steckler, Steven Alan**
**259 Willow Way**
**Clark New Jersey (US)**

(74) Representative: **Smith, Thomas Ian Macdonald et al**
**RCA International Limited Norfolk House (1st Floor) 31 St. James Square**
**London SW1Y 4JR (GB)**

(56) References cited:
**Proceedings of the IEEE, vol. 69, no. 3, March 1981, New York, R.E. CROCHIERE and L.R. RABINER "Interpolation and decimation of digital signals - A tutorial review", pages 300-331**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to signal separation systems, and in particular, to a comb filter arrangement for separating the luminance and chrominance components of a digitized video signal at a reduced data rate.

Conventional television broadcast systems are arranged so that much of the brightness (luminance) information contained in an image is represented by signal frequencies which are concentrated about integer multiples of the horizontal line scanning frequency. Color (chrominance) information is encoded and inserted in a portion of the luminance signal spectrum around frequencies which lie halfway between the multiples of the line scanning frequency (i.e., at odd multiples of one-half the line scanning frequency).

Chrominance and luminance information can be separated by appropriately combing the composite signal spectrum. Known combing arrangements take advantage of the fact that the odd multiple relationship between chrominance signal components and half the line scanning frequency causes the chrominance signal components for corresponding image areas on successive lines to be 180° out of phase with each other. Luminance signal components for corresponding image areas on successive lines are substantially in phase with each other.

In a comb filter system, one or more replicas of the composite image-representative signal are produced which are time delayed from each other by at least one horizontal line scanning interval (a so-called one-H delay). The signals from one line are added to signals from a preceding line, resulting in the cancellation of the chrominance components, while reinforcing the luminance components. By subtracting the signals of two successive lines (e.g., by inverting the signals of one line and then combining the two), the luminance components are cancelled while the chrominance components are reinforced. Thus, the luminance and chrominance signals may be mutually combed and thereby may be separated advantageously.

The composite video signal may be comb filtered in an analog form, a sampled data form, or a digital form. Comb filters using analog signal delay lines for the (approximately) one-H delay lines are commonly employed in PAL-type receivers to separate the red and blue color difference signals, taking advantage of the one-quarter line frequency offset of the interlacing of the two signals. An example of a comb filter system for a sampled data signal is shown in U.S. Patent 4,096,516, in which the delay line comprises a $682\frac{1}{2}$ stage charge-coupled device (CCD) delay line which shifts signal samples from stage to stage at a 10.7 MHz rate to achieve a one-H delay. The article "Digital Television Image Enhancement" by John P. Rossi, published in Volume 84 of the Journal of the Society of Motion Picture and Television Engineers July 75 beginning at page 545 shows a digital comb filter in which the one-H delay is provided by a digital storage medium for 682 samples which is accessed at a 10.7 MHz rate.

In the CCD delay line described in the above-referenced U.S. patent, $682\frac{1}{2}$ stages are needed to transfer charge packets related to the analog video signal. But in the digital delay line described in the Rossi article, the video signal is in the form of eight-bit digital samples. This arrangement requires the use of eight storage locations for each of the 682 samples in a horizontal line, or a storage medium for 5,456 bits. Moreover, this delay line is only of sufficient size for a system in which an NTSC color video signal is sampled at a rate of three times per subcarrier cycle (i.e., using a 10.738635 MHz sampling signal). Another proposed sampling frequency for digitizing the analog video signal is 14.3181818 MHz, or four times the color subcarrier frequency. A one-H digital delay line operating at this frequency requires storage for 910 samples which, at eight bits per sample, requires a total of 7280 storage locations. Since a storage medium of this capacity is difficult to fabricate economically, it is desirable to provide a digital comb filter system which requires fewer storage locations.

IEEE Journal of Solid State Circuits Volume SC16, number 3, June 1981, pages 179—182 entitled "an NMOS dual mode digital law pass filter to color TV" discloses the digital separation of the luminance and chroma band of a color TV signal.

The digital separator operates with a system clock of four times the subcarrier frequency ($4f_{sc}$) and uses a comb filter having a 2H (or alternatively frame) delay which operates on the chroma band. The system clock of $4f_{sc}$ and the 2H delay demand a large number of storage elements to realise the delay element of the comb filter. Again the large number of storage elements is undesirable.

DE—AI—3028705 discloses a finite impulse response filter and teaches that a digital filter may have associated with it: either an interpolating function so as to obtain an output with an increased data rate; or a sampling function so as to obtain an output with a reduced data rate.

According to the present invention, there is provided
a television signal processing system, including a source of sampled data video signals at a given data rate having first and second interleaved signal components in a passband and a signal separation system comprising:
means having an input coupled to said signal source, and an output, for passing said sampled data video signals at a reduced data rate which is less than said given data rate over a portion of said passband; and
a comb filter responsive to the output of said reduced data rate signal passing means, and operated at said reduced data rate for producing a comb filtered output signal.

In accordance with an embodiment of the present invention a video signal having frequency interleaved signal components is sampled at a given data rate and is applied to a first bandpass filter, which produces a filtered signal restricted to a portion of the video passband of the composite video signal. Samples are applied to a comb filter operating at a data rate less than the original data rate, to produce a comb-filtered signal. The comb-filtered signal is then applied to a second bandpass filter, which provides a sequence of samples occupying a portion of the video passband. The comb filter arrangement operating at a reduced data rate requires comparably fewer storage locations than previous arrangements.

In another embodiment, a digitized composite video signal of a given sampling rate is applied to a bandpass filter, which produces a filtered signal restricted to a portion of the passband of the composite video signal. The filtered signal is then subsampled at a rate which satisfies the Nyquist criterion for information of the restricted passband. Samples, now at a reduced data rate, are applied to a one-H delay line, and delayed and undelayed signals are combined to produce a first comb-filtered signal. The first comb-filtered signal is then applied to an interpolator, which provides a sequence of samples at the sampling rate of the original digitized composite video signal. This sequence of samples is then combined with the samples of the composite video signal to produce a second comb-filtered signal.

In the drawings:

Figure 1 illustrates in block diagram form a digital signal separation system constructed in accordance with the principles of the present invention;

Figures 2 and 3 illustrates in block diagram form bandpass filters suitable for use in the signal separation system of Figure 1;

Figure 4 illustrates in block diagram form a digital comb filter suitable for use in the arrangement of Figure 1;

Figure 5 illustrates in block and logic diagram form an interpolator and a delay circuit suitable for use in the arrangement of Figure 1;

Figure 6 is a timing diagram showing the instantaneous signal contents at points in the arrangements of Figures 2, 4 and 5;

Figures 7 and 9 illustrate in block and logic diagram form a clock signal generating arrangement suitable for use with the arrangements of Figures 2, 4 and 5;

Figures 8 and 10 are timing diagrams showing waveforms illustrating the operation of the clock signal generating arrangement of Figures 7 and 9;

Figure 11 illustrates in block diagram form a digital signal separation system constructed in accordance with the principles of the present invention;

Figure 12 illustrates in block diagram form a bandpass filter and comb filter arrangement suitable for use in the embodiment of Figure 11;

Figure 13 illustrates in block and logic diagram form a clock generator circuit for the comb filter system of Figures 12 and 14;

Figure 14 illustrates in block diagram form an interpolating filter suitable for use in the embodiment of Figure 11;

Figure 15 is a timing diagram used to explain the operation of the clock generator circuit of Figure 13;

Figures 16 and 17 are timing diagrams which show the instantaneous signal contents at points in the embodiments of Figures 12, 13 and 14;

Figure 18 illustrates in block diagram form another embodiment of a digital comb filter system constructed in accordance with the principles of the present invention;

Figure 19 illustrates in block diagram form a digital lowpass filter suitable for use in the embodiment of Figure 18; and

Figure 20 is a graph showing frequency response characteristics illustrating principles of operation of the embodiments of the present invention. ·

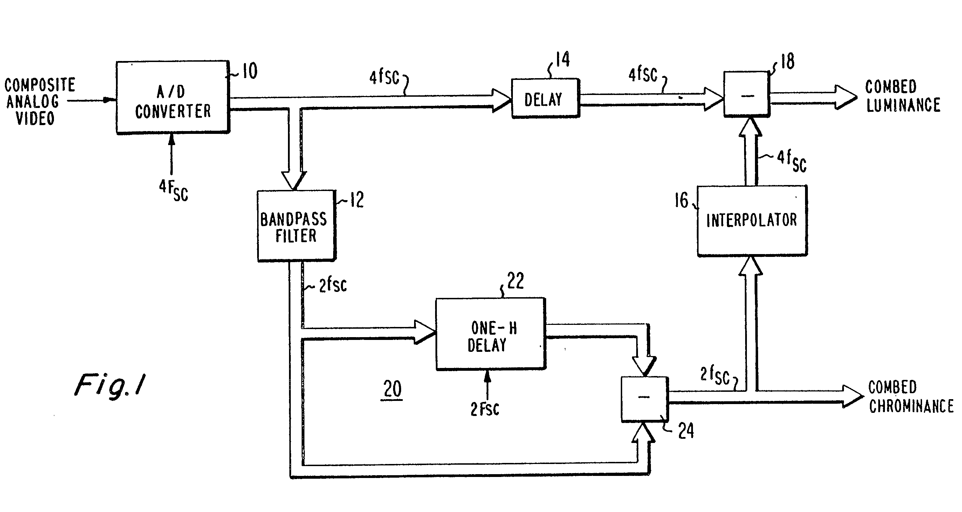

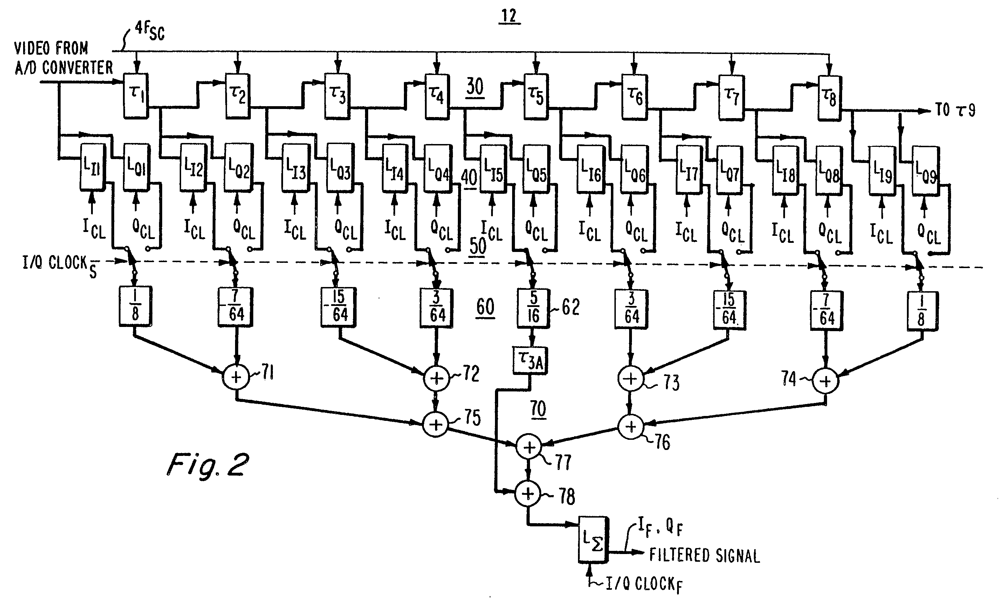

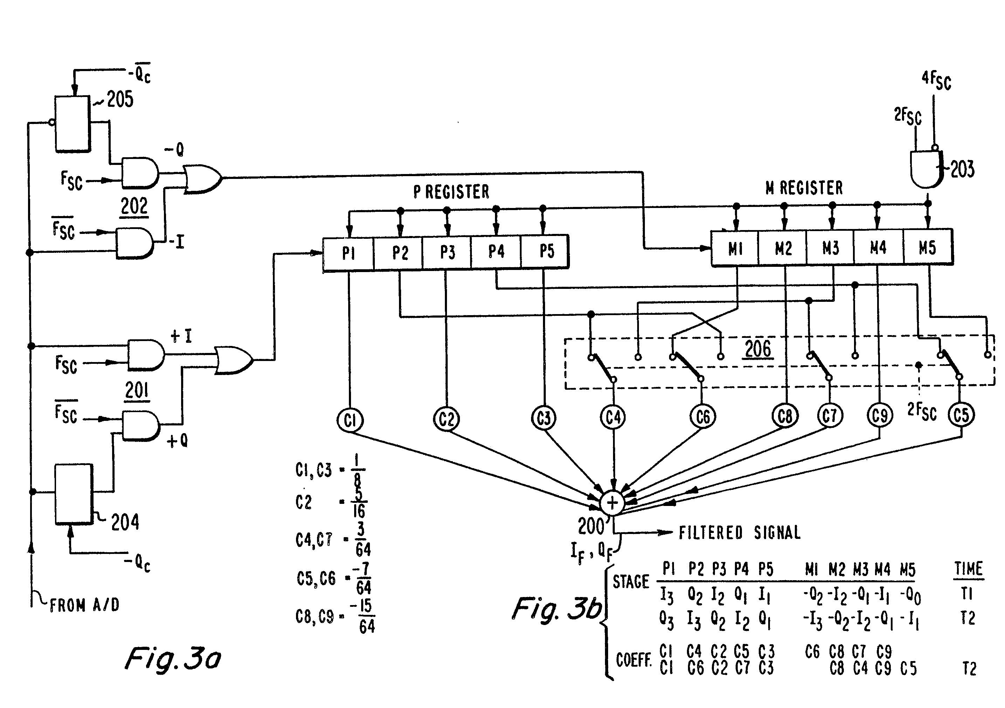

Referring to Figure 1, a signal separation system constructed in accordance with the principles of the present invention is shown. In Figure 1, single-line arrows represent paths for individual signals, and broad arrows represent data paths for multibit digital samples.

In Figure 1, a composite analog video signal is applied to the input of an analog-to-digital (A/D) converter 10. The A/D converter samples the analog video signal in response to a sampling signal ($4F_{sc}$) and produces digital video samples at the sampling signal frequency ($4f_{sc}$). As used herein, clock signals are designated using upper-case letters (e.g. $4F_{sc}$) and the frequency or sample rate of signals are designated using lower-case letter (e.g. $4f_{sc}$).

In the embodiment of Figure 1, the sampling signal frequency $4f_{sc}$ is equal to four times the color subcarrier frequency, where $f_{sc}$ is the color subcarrier frequency. In the NTSC color television system in which the color subcarrier frequency is 3.579545 MHz, the $4f_{sc}$ sampling signal frequency is 14.31818 MHz.

The $4f_{sc}$ rate digital samples produced by the A/D converter 10 are applied to inputs of a delay stage 14 and a digital bandpass filter 12. The passband of the bandpass filter 12 includes the chrominance frequencies which are distributed about the 3.58 MHz color subcarrier frequency in the NTSC system. The delay stage 14 provides an equalizing delay which matches the delays encountered by signals between the input of the bandpass filter 12 and the output of an interpolator 16.

The bandpass filter 12 produces filtered output signals at a clock rate which is lower than that of the input signals to the filter. This may be accomplished, for example, by subsampling the output signals produced by the filter. In the embodiment of Figure 1, the bandpass filter 12 produces output signals at a $2f_{sc}$ rate, which is half the rate of the input signals to the filter. The $2f_{sc}$ rate of the filtered signals satisfies the Nyquist sampling criterion for the bandwidth of the information-bearing filtered signals.

The $2f_{sc}$ rate filtered signals are applied to a comb filter 20. The comb filter 20 includes a one-H delay line 22, also clocked at the $2f_{sc}$ signal rate, and a subtractor 24. The filtered signals passed by the one-H delay line are applied to one input of the subtractor 24, and undelayed filtered signals are applied to the second input of the subtractor. The subtractor 24 will therefore produce comb filtered chrominance signals at a $2f_{sc}$ clock rate. The comb filtered chrominance signals are now in a form suitable for further processing and display.

The comb filtered chrominance signals are also applied to the input of an interpolator 16. The interpolator 16 interpolates the $2f_{sc}$ rate chrominance samples to produce signal values intermediate the $2f_{sc}$ samples. The output signal of the interpolator thereby comprises combed chrominance signal samples at the $4f_{sc}$ sampling rate. These $4f_{sc}$ rate combed chrominance signals are applied to one input of a subtractor 18, which also receives $4f_{sc}$ rate samples passed by the delay stage 14. The subtractor 18 subtracts the comb filtered chrominance samples from the composite signal samples passed by the delay stage 14 to produce comb filtered luminance signal samples. The comb filtered luminance signal is available at the output of the subtractor 18 for subsequent luminance information processing.

The arrangement of Figure 1 is advantageous in that the comb filter 20 operates at a lower data rate than the sampling rate of the composite signal produced by the A/D converter 10. This means that the one-H delay of the delay line 22 can be provided by a 455 stage delay line for NTSC signals, instead of the 910 stage delay line required for a $4f_{sc}$ data rate. For example, if the comb filter produces eight bit filtered samples, only 3640 storage locations are needed in the one-H delay line instead of the 7280 locations required for a $4f_{sc}$ comb filter. The $2f_{sc}$ rate comb filtered chrominance signals are then interpolated to supply chrominance samples at the composite signal rate of $4f_{sc}$ and subtracted from the composite signal samples to produce a comb filtered luminance signal.

A digital finite impulse response (FIR) bandpass filter suitable for use as bandpass filter 12 in the embodiment of Figure 1 is shown in detail in Figure 2. In Figures 2, 4, 5, 11 and 20 broad lines depict data paths for multibit samples and thin lines depict clock signal paths.

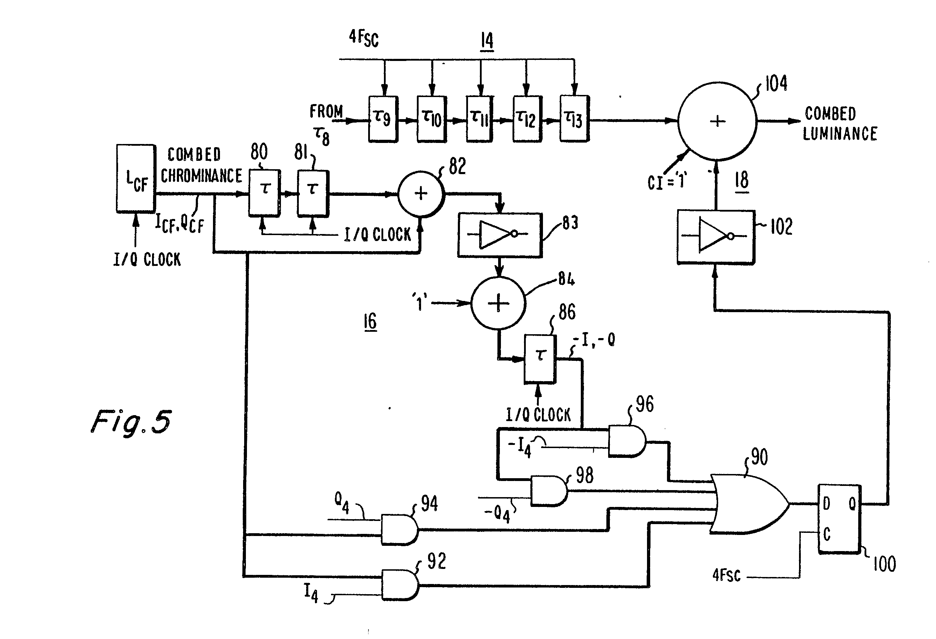

Composite video signals produced by the A/D converter 10 are applied to the input of the first stage of an eight-stage shift register 30, including delay stages $\tau_1$ through $\tau_8$. Each delay stage is clocked by a $4F_{sc}$ clock signal so as to store a multibit sample for one cycle of the $4F_{sc}$ clock signal. For instance, if the samples are eight bits in length, each delay stage will contain eight bits of information. The video signal samples are clocked sequentially through the register 30, with output signals from the last stage $\tau_8$ being applied to a delay stage $\tau_9$ in the delay stage 14 of Figures 1 and 5. In addition, the input of the first stage $\tau_1$

and the outputs of the remaining stages are coupled to inputs of data latches of a latch register 40.

The latch register 40 includes nine $L_I$ latches labelled $L_{I1}$ through $L_{I9}$, and nine $L_Q$ latches labelled $L_{Q1}$ through $L_{Q9}$. The $L_I$ and $L_Q$ latches are arranged in pairs at the outputs of the shift register stages, with latches $L_{I1}$ and $L_{Q1}$ having their inputs coupled to the input of shift register stage $\tau_1$, latches $L_{I2}$ and $L_{Q2}$ having their inputs coupled to the input of shift register stage $\tau_2$, and so forth. The $L_I$ latches are loaded in parallel by a clock signal $I_{CL}$, and the $L_Q$ latches are loaded in parallel by a second clock signal $Q_{CL}$. The $I_{CL}$ and $Q_{CL}$ clock signals in this embodiment are each of the same frequency, $f_{sc}$, but are of different phases.

The video signal samples held in the latches 40 are applied to inputs of weighting function circuits 60 by a multiplexer 50. The multiplexer 50, representatively shown in Figure 2 as an array of switches, alternately couples the outputs of the $L_I$ and $L_Q$ latches to inputs of the weighting function circuits 60. The multiplexer 50 is switched by an I/Q CLOCK$_S$ signal at a $2f_{sc}$ rate. The weighting function circuits weight the applied signals by respective weights of 1/8, −7/64, −15/64, 3/64 and 5/16 as shown in the Figure. The weighting function circuits may be constructed using shift matrices and adders as described in United States patent application number 363,827 entitled "Digital Filter Circuits", filed March 31, 1982 by Lauren A. Christopher. (GB—A—2104695)

Weighted signal samples produced by the weighting function circuits 60 are applied to an adder tree 70, which sums all of the weighted samples at the output of the last adder 78 of the adder tree. The output signal of each weighting function circuit except for the center circuit 62 passes through four adders in the tree to reach the output of adder 78. The output of the center circuit 62 passes through only one adder 78, and thus will normally arrive at the output of adder 78 ahead of the other samples of a corresponding point in time. In order to bring the center circuit samples into the same time relationship as the other samples, a delay $\tau_{3A}$ equal to the delay of three adder tree adders is inserted in the signal path at the output of the center weighting function circuit. The weighted samples will thereby be summed in the proper time relationship at the output of the final adder 78. The summed signal samples at the output of adder 78 are then latched into an output latch $L_\Sigma$ by the I/Q CLOCK$_F$, which produces filtered signals $I_F$, $Q_F$ at the rate of $2f_{sc}$.

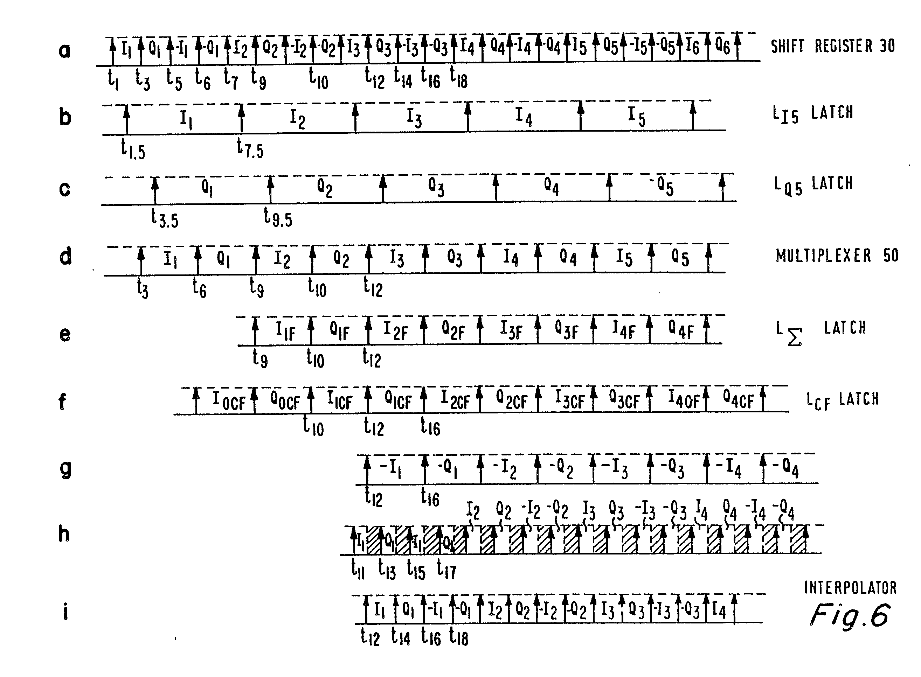

The operation of the bandpass filter of Figure 2 is explained with reference to Figure 6, which depicts the sequence of operation of the filter. Figure 6a illustrates the contents of the shift register 30. Composite video signal samples, identified as $I_1$, $Q_1$, $−I_1$, $−Q_1$, etc. are shifted through the register 30 at a $4f_{sc}$ rate. The arrows in Figure 6a indicate the times at which the register is clocked to shift the data. After four shifts, the first sample $I_1$ has been clocked into the

$\tau_4$ stage. At that time, $t_1$, succeeding samples $Q_1$, $-I_1$, and $-Q_1$ are located in shift register stages $\tau_3$, $\tau_2$ and $\tau_1$, respectively. Preceding signal samples are stored in stages $\tau_5$ through $\tau_8$. One-half cycle of the $4F_{sc}$ clock later, at time $t_{1.5}$, the contents of the shift register 30 is loaded into the $L_I$ latches by the $I_{CL}$ clock. Figure 6b illustrates the contents of latch $L_{I5}$, which now holds sample $I_1$. It follows that latch $L_{I4}$ now holds sample $Q_1$, latch $L_{I3}$ holds sample $-I_1$, and so forth.

At time $t_3$, the shift register 30 is again clocked so that sample $Q_1$ is now located in stage $\tau_4$. One-half cycle of the $4F_{sc}$ clock later, at time $t_{3.5}$, the samples held in the shift register are loaded into the $L_Q$ latches. Figure 6c illustrates the contents of latch $L_{Q5}$, which contains sample $Q_1$ following time $t_{3.5}$.

The shift register 30 and latches 40 continue to be clocked in this manner. After three $4F_{sc}$ clock cycles $t_5$, $t_6$ and $t_7$, sample $I_2$ is located in stage $\tau_4$ and the $L_I$ latches are reloaded at time $t_{7.5}$. The shift register is shifted again at time $t_9$ and the $L_Q$ latches are loaded at time $t_{9.5}$.

The multiplexer 50 directs the samples from the latches 40 to the weighting function circuits at a $2f_{sc}$ clock rate, as shown in Figure 6d. From time $t_3$ to time $t_6$ the $L_I$ latches are connected to the inputs of the weighting function circuits by the multiplexer. From time $t_6$ to time $t_9$ the $L_Q$ latches are connected to the weighting function circuits. The multiplexer continues to alternate between the latches at this $2f_{sc}$ rate.

The samples now propagate through the weighting function circuits 60 and the adder tree 70 to the output of adder 78. Since adders can be expected to exhibit appreciable propagation delay as compared to other circuit elements, such delay must be taken into consideration in the operation of the bandpass filter. For purposes of illustration, it will be assumed that the weighting function circuits exhibit propagation delays of 66 nanoseconds, and that each adder exhibits a propagation delay of 40 nanoseconds. Thus, each signal experiences a delay of 226 nanoseconds as it passes from the output of the multiplexer 50 through a weighting function circuit and four adder delays. For instance, signals held in latches $L_I$ are coupled through the multiplexer at time $t_3$, but do not arrive at the output of adder 78 for 226 nanoseconds, which is a time preceding time $t_9$ by approximately 54 nanoseconds. Therefore, by time $t_9$ the signal at the output of adder 78 has had 54 nanoseconds to settle, and is then clocked into latch $L_\Sigma$ at time $t_9$. It is seen that five cycles of the $4f_{sc}$ shift register clock ($t_1$—$t_9$ in Figure 6a) elapse before the filtered signal sample $I_{1F}$ corresponding to sample $I_1$ is produced at the output of the bandpass filter, as shown in Figure 6e. This delay time is taken into consideration in the selection of the equalizing delay 14 in Figures 1 and 5.

An alternate bandpass filter design 12' is shown in Figure 3. In this arrangement, the filter delay stages as well as the computational elements are operated at a reduced rate. It will be appreciated that structurally differing FIR filters will produce similar FIR filter functions provided they operate to produce the same sum of weighted samples in the same time sequence. The circuitry necessary to produce this result requires apparatus to successively store applied signal samples and route the requisite samples to the coefficient multipliers in the necessary sequence.

The Figure 3 filter circuitry accomplishes this result by applying the input signal samples in an alternating mode to two separate delay registers P and M which operate at half the sample rate. The coefficient multipliers are respectively interconnected to process input signal samples in the same sequence as like coefficient multipliers process the samples in the Figure 2 filter to generate $+I$ and $+Q$ filtered samples. The output products are applied to a summing circuit 200 which may be similar to the adder tree 70 in Figure 2. The Figure 3a filter does not require the filtered signal to be processed through an output latch as does the Figure 2 circuit to expand the two filtered output samples $I_F$, $Q_F$ over the time period of the four input samples.

In Figure 3a the FIR filter includes a "P" register having five cascaded delay stages, P1—P5, into which the positive I and Q samples are successively loaded. A "M" register including five delay stages M1—M5 is loaded with successive "minus" I and Q input samples. Each of the delay stages of the P and M registers have output taps for applying delayed signal samples to the respective weighting circuits C1—C9. Certain ones of the weighting circuits are connected directly to the register tap points while others are multiplexed between tap points on the two registers at one half the input sample rate by a multiplexer or switch circuit 206.

Figure 3b is a state table showing the states of the particular register stages P1—P5 and M1—M5 for a time T1, and the time T2 which corresponds to the time T1 plus one data shift by the registers. The two rows of values $C_i$ correspond to the respective weighting circuits connected to the respective register stage in the particular columns for times T1 and T2. With reference to Figure 3b, Figure 2 and Figure 6, it will be seen that the particular samples of this sequence of nine samples in the P and M registers are applied to like coefficient multipliers as the first sequence of nine samples in the Figure 2 filter circuit (as well as all succeeding sets of nine samples). Thus, on a sample by sample basis, the filter functions of the Figure 2 and 3a filters are the same.

Loading of the P and M registers is controlled by the signal sampling circuits 201 and 202 respectively, and the register clocking pulses generated by gate 203. The sampling circuits apply all the positive I and Q signal samples to the P register and all of the negative I and Q samples to the M register. Because the two registers operate in parallel, they can be operated at 1/2 the input sample rate. However, because two successive samples at the $4fsc$ rate are alternately applied to each register i.e., $+I$ and $+Q$ to register then $-I$ and $-Q$ to register M, each second

sample (the $\pm Q$ samples) must be temporarily latched (204, 205) before application to the respective register so that data is not lost.

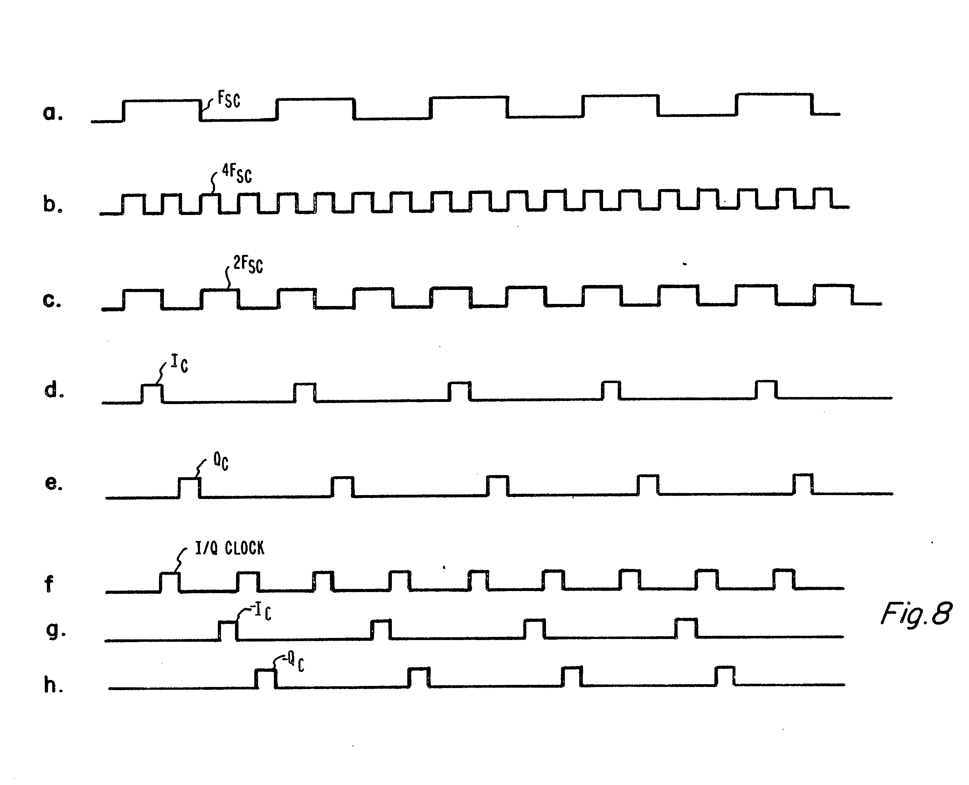

The timing of the clocking signals applied to sampling circuits 201 and 202 is illustrated in Figure 8.

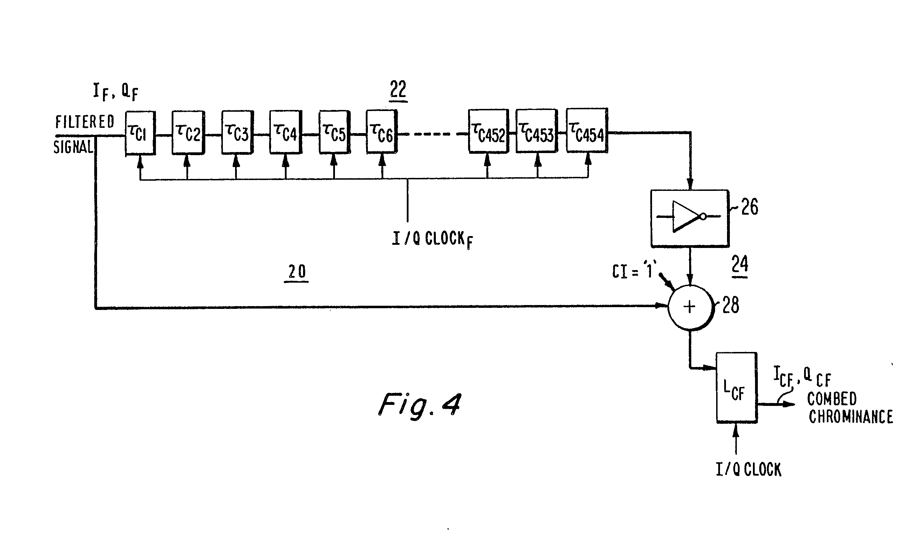

In Figure 4, the comb filter 20 of Figure 1 is shown in further detail. The filtered signal $I_F$, $Q_F$ from the bandpass filter 12 is coupled to the first stage $\tau_{CI}$ of a 454 stage shift register 22, and to an input of an adder 28. The shift register 22 is clocked by an I/Q CLOCK$_F$ signal at a $2f_{sc}$ rate, producing samples delayed by the scanning time of one horizontal television line at the output of the last stage $\tau_{C454}$. The delayed samples are to be subtractively combined with the undelayed samples in subtractor 24. The delayed samples are arithmetically negated and added to the undelayed samples. The process of arithmetically negating digital samples in the two's complement operation. To perform this operation, the bits of the delayed samples are inverted or one's complemented by inverting inverting circuit 26, which inverts each individual sample bit. The one's complemented delayed signal is then applied to a second input of adder 28, together with a "carry-in" CI equal to '1'. The addition of the CI bit accomplishes a two's complementing of the delayed signal for proper two's complement subtraction. The comb filtered signals at the output of adder 28 are latched into latch $L_{CF}$ by the I/Q CLOCK signal. Adder 28, like the adders of the bandpass filter, is assumed to exhibit a 40 nanosecond propagation delay. Thus, a comb filtered signal sample $I_{1CF}$ is produced at the output of latch $L_{CF}$ delayed by one cycle of the I/Q CLOCK with respect to corresponding signal sample $I_{1F}$, as shown by Figure 6f. It is seen that filtered sample $I_{1F}$ is produced at time $t_9$ in Figure 6e, whereas the corresponding comb filtered signal sample $I_{1CF}$ is produced at time $t_{10}$ in Figure 6f.

Figure 5 illustrates an interpolator suitable for use as inter-polator 16 in the embodiment of Figure 1. Any of a number of interpolation techniques may be employed to create a $2f_{sc}$ rate chrominance signal from the $2f_{sc}$ rate chrominance signal produced by the comb filter 20. The interpolator shown is a linear interpolator. This circuit may be replaced by a variety of polynomial interpolators depending on the particular transient response desired of the combed luminance signal. For a discussion of digital interpolation, see R. E. Crochiere and L. R. Rabiner, "Interpolation and Decimation of Digital Signals —A Tutorial Review", Proc. of IEEE, Vol. 69, No. 3, March 1981, pp. 300—331. The interpolator of Figure 5 implements an algorithm of the form

$$-I = \frac{-(I_1 + I_0)}{2} \ , \quad -Q = \frac{-(Q_1 + Q_0)}{2}$$

where $I_1$ and $Q_1$ are comb filtered chrominance samples $I_{1CF}$ and $Q_{1CF}$, and $I_0$ and $Q_0$ are comb

filtered chrominance samples preceding samples $I_{1CF}$ and $Q_{1CF}$. A multiplexer then generates a combed chrominance data stream of the form $I_1$, $Q_1$, $-I_1$, $-Q_1$, at a $4f_{sc}$ rate.

In Figure 5, the output $I_{CF}$, $Q_{CF}$ of the comb filter latch $L_{CF}$ (of Figure 4) is coupled to two delay stages 80 and 81 which are clocked by the I/Q CLOCK signal, and to an input of an adder 82. The output of the second delay stage 81 is coupled to a second input of adder 82. The output of adder 82 is coupled to the input of an inverting circuit 83, the output of which is coupled to one input of an adder 84, the other input of which receives the value "1". The output of adder 84 is coupled to the input of a delay stage 86. Stage 86 is also clocked by the I/Q CLOCK signal. The output of delay stage 86 is coupled to inputs of AND gates 96 and 98, and the output of comb filter latch $L_{CF}$ is coupled to inputs of AND gates 92 and 94. The second inputs of respective AND gates 92—96 are coupled to receive respective phase-shifted clock signals $I_4$, $Q_4$, $-I_4$ and $-Q_4$. The output of AND gates 92—96 are coupled to inputs of an OR gate 90 to form a multiplexer which produces a combed chrominance signal at a $4f_{sc}$ rate. The output of OR gate 90 is coupled to the data input of a D-type flip-flop 100 which has its clock input coupled to receive the $4F_{sc}$ clock signal.

The interpolator operates to form interpolated values $-I$ and $-Q$ by adding $I_{CF}$ and $Q_{CF}$ samples to previous $I_{CF}$ and $Q_{CF}$ samples, respectively, in adder 82. For instance, when the $L_{CF}$ latch is applying sample $I_{1CF}$ to one input of adder 82, the preceding sample $Q_{0CF}$ is held in stage 80 and the preceding sample $I_{0CF}$ is held in stage 81 and applied to the second input of the adder 82. The next I/Q CLOCK cycle will apply samples $Q_{1CF}$ and $Q_{0CF}$ to the adder 82. The adder 82 thus produces consecutive samples of the form $I_n + I_{n-1}$ and $Q_n + Q_{n-1}$. These samples are of the same bit length as the input signals to the adder, but exclude the least significant adder output bit. That is, if the input signals to the adder are eight bits in length, the adder produces nine output bits, with the upper eight bits taken as the output samples. This effects a division of the sum by two. The bits of the adder samples are then inverted, or one's complemented by the inverting circuit 83. A value '1' is then added to the inverted sum from inverting circuit 83 by adder 84, which effects a two's complementing or arithmetic negation of the samples. Interpolated samples $-I$ and $-Q$ according to the above algorithm are thus produced at the output of the adder 84. These samples are then clocked sequentially into delay stage 86, which produces a sequence of interpolated samples as shown in Figure 6g.

The interpolated $-I$ and $-Q$ samples and the comb filter output samples are then multiplexed at a $4f_{sc}$ rate by AND gates 92—96 and OR gate 90. Referring to Figure 6h, at time $t_{11}$ the $I_4$ clock applies the sample $I_{1CF}$ of Figure 6f through OR gate 90 to the input of D-type flip-flop 100 by way of AND gate 92. At time $t_{12}$, the $4F_{sc}$ clock signal loads this sample into the D-type flip-flop 100,

identified by the $I_1$ interval in Figure 6i. At time $t_{13}$, sample $Q_{1CF}$ of Figure 6f is applied through OR gate 90 to the input of flip-flop 100 by the $Q_4$ clock signal applied to AND gate 94. At time $t_{14}$, this sample is loaded into flip-flop 100 as shown by interval $Q_1$ in Figure 6i. At time $t_{15}$, the $-I_1$ sample held in stage 86 is applied through OR gate 90 to the input of flip-flop 100 by way of AND gate 96 and clock signal $-I_4$. At time $t_{16}$, the $-I_1$ sample is loaded into flip-flop 100, and delay stage 86 is clocked to hold the $-Q_1$ interpolated sample. At time $t_{17}$, the $-Q_1$ sample is applied to OR gate 90 by way of AND gate 98 as enabled by the $-Q_4$ clock signal, and at time $t_{18}$ the $-Q$ sample is loaded into flip-flop 100. Operation continues in this manner so that the $4f_{sc}$ rate signal sequence of Figure 6i is produced at the output of flip-flop 100.

The $4f_{sc}$ chrominance signal sequence is then subtracted from the composite video signal by subtractor 18, which includes an inverting circuit 102 and an adder 104 as shown in Figure 5. The bits of the chrominance samples produced by flip-flop 100 are applied to inverting circuit 102 which, together with the carry-in bit CI being '1' of adder 104, accomplishes a two's complementing of the chrominance signal for subtraction. A second input of adder 104 is coupled to receive composite video signal samples from delay stage 14, which in this embodiment is a five-stage shift register clocked by the $4F_{sc}$ clock signal. The delay stage 14 aligns samples of the composite signal in time with corresponding chrominance signal samples. Referring again to Figure 6a, it will be remembered that sample $I_1$ of the composite signal was located in center stage $\tau_4$ of the bandpass filter shift register 30 at time $t_1$. The corresponding $I_1$ chrominance sample was not produced by flip-flop 100 until time $t_{12}$, as shown in Figure 6i. From Figure 6a, it is seen that a delay of nine cycles of the $4F_{sc}$ clock occurred between time $t_1$ and time $t_{12}$. Thus, delay stage 14 must delay the composite signal by nine cycles of the $4F_{sc}$ clock to bring the samples into proper time sequence at the inputs of adder 104. Four cycles of this delay are provided by stages $\tau_5$, $\tau_6$, $\tau_7$ and $\tau_8$ of the bandpass filter shift register. The remaining five cycles of delay are provided by shift register stages $\tau_9$—$\tau_{13}$ in Figure 5, which receive composite video samples from shift register stage $\tau_8$ in Figure 2. Therefore, the signal samples are in a proper time sequence at the inputs of adder 104 so that the combed chrominance samples are subtracted from the composite video signal samples, producing a comb filtered luminance signal at the output of adder 104.

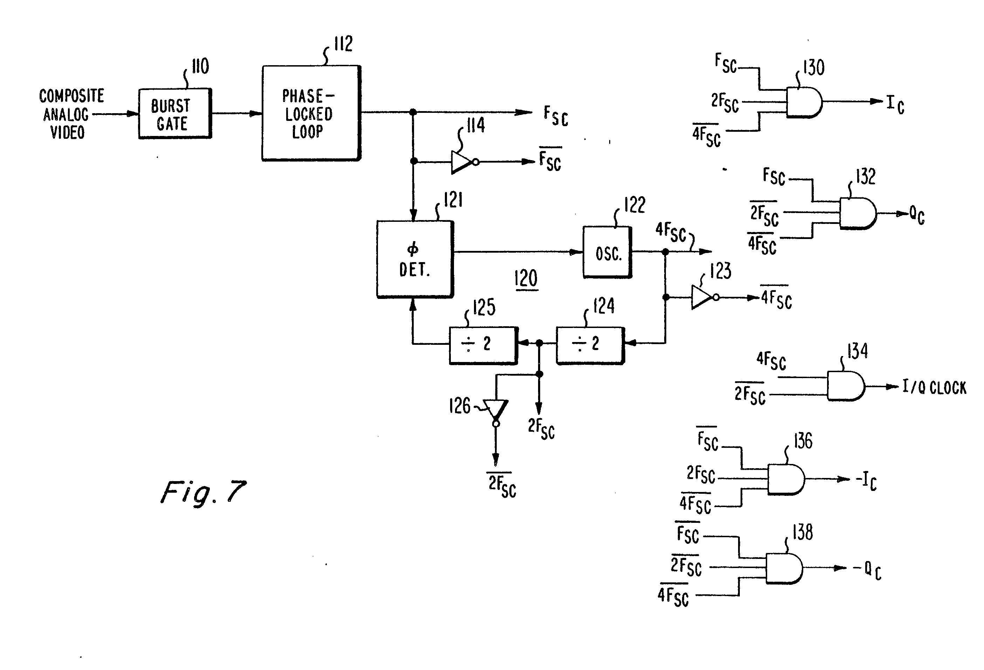

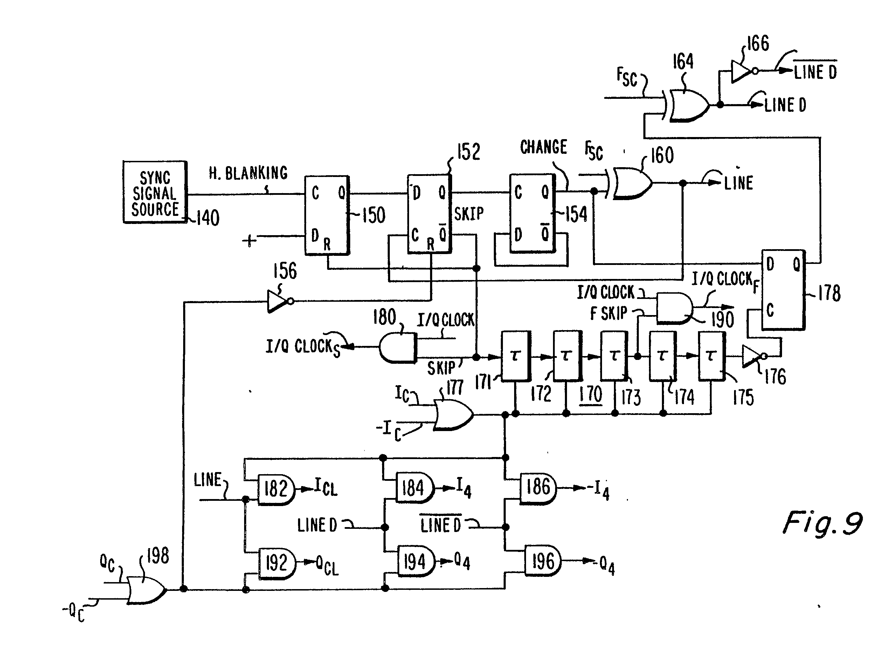

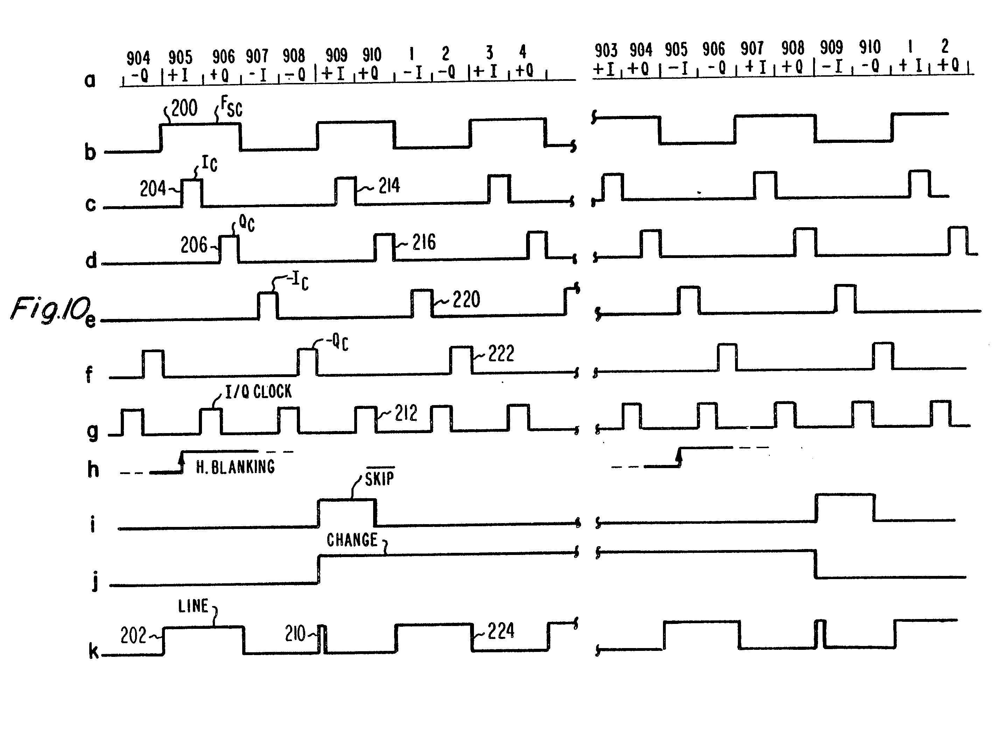

Necessary clock signals for the embodiments of Figures 1—5 are produced by the clock generating network of Figures 7 and 9. The composite analog video signal is applied to a burst gate 110 in Figure 7, which gates the color burst signal to a phase-locked loop 112. The phase-locked loop 112 produces a signal $F_{sc}$ at the color subcarrier frequency in phase alignment with the color burst signal. An $F_{sc}$ signal waveform is shown in Figures 8a and 10a. For I, Q sampling a delay equal to 57° of the $F_{sc}$ signal would be inserted at the output of the phase-locked loop 112.

An inverter 114 is coupled to receive the $F_{sc}$ signal and produces a complementary signal $\overline{F_{sc}}$ at its output. The $F_{sc}$ signal is also applied to a phase detector 121 of a second phase-locked loop 120. The phase detector 121 produces a control signal to control the phase and frequency of an oscillator 122, which produces a $4F_{sc}$ signal at four times the color subcarrier frequency, as shown in Figure 8b. The $4F_{sc}$ signal is applied to a divide-by-two circuit 124 and to an inverter 123, the latter producing a complementary $\overline{4F_{sc}}$ signal. The divide-by-two circuit 124 produces a $2F_{sc}$ signal at twice the subcarrier frequency, as shown in Figure 8c. The $2F_{sc}$ signal is inverted by an inverter 126 to produce a complementary $\overline{2F_{sc}}$ signal. The $2F_{sc}$ rate signal is also applied to the input of a second divide-by-two circuit 125, which produces an $f_{sc}$ rate signal for the phase detector 121. Thus, the $F_{sc}$, $4F_{sc}$ and $2F_{sc}$ signals and their complements are maintained in substantial phase synchronism.

The $F_{sc}$, $2F_{sc}$ and $\overline{4F_{sc}}$ signals are applied to inputs of an AND gate 130 to produce pulses of an $I_C$ signal when all of the input signals are high, as shown in Figures 8d and 10c. Similarly, the $F_{sc}$, $\overline{2F_{sc}}$ and $\overline{4F_{sc}}$ signals are applied to inputs of an AND gate 132, which produces a $Q_C$ signal as shown in Figures 8e and 10d. The $4F_{sc}$ and $\overline{2F_{sc}}$ signals are applied to inputs of an AND gate 134, to produce an I/Q CLOCK signal, as shown in Figures 8f and 10g. The $\overline{F_{sc}}$, $2F_{sc}$ and $\overline{4F_{sc}}$ signals are applied to inputs of an AND gate 136 to produce clock signal $-I_C$ which is illustrated in Figures 8g and 10e. The $\overline{F_{sc}}$, $\overline{2F_{sc}}$ and $\overline{4F_{sc}}$ signals are applied to inputs of an AND gate 138 to produce clock signal $-Q_C$ as shown in Figures 8h and 10f. The I/Q CLOCK signal of Figure 8f is seen to be in the proper phase alignment with the $4f_{sc}$ signal for operation of the bandpass filter, comb filter and interpolator of Figures 2, 4 and 5, and the $I_C$, $Q_C$, $-I_C$ and $-Q_C$ clock signals are seen to be in the quadrature phase relationship required by the multiplexer of the interpolator of Figure 5. The clock signals of Figure 8 are also in the same timing relationships as the signal waveforms of Figure 6.

By reason of the odd multiple frequency relationship between the line scanning (horizontal synchronizing) frequency and the color subcarrier ($f_{sc}$) frequency, samples on one video line of information are of opposite phase with respect to vertically aligned samples on succeeding and preceding lines. That is, if the first sample on one line is a $+I$ sample, the first sample on the next line is a $-I$ sample. This relationship, which underlies the principle of comb filtering, requires that the phases of the $I_{CL}$ and $Q_{CL}$ clock signals be changed from line-to-line so that $+I$ and $+Q$ samples will be selected on one line and combined with vertically aligned $-I$ and $-Q$ samples on the next line. In addition, the interpolator must be operated so that, on the first line,

−I and −Q samples are interpolated to fill in between the +I and +Q samples, and that +I and +Q samples are interpolated to fill in between the −I and −Q samples on the following line.

Clock circuitry which performs the necessary phase shifts of the clock signals is shown in Figure 9. In Figure 9, a synchronizing signal source 140 produces a horizontal blanking signal, which is applied to the clock input of a D-type flip-flop 150. The data input of flip-flop 150 is coupled to a source of logical one level voltage (+). The Q output of flip-flop 150 is coupled to the data input of a D-type flip-flop 152. The Q output of flip-flop 152 is coupled to the clock input of a D-type flip-flop 154, and the $\overline{Q}$ output of the flip-flop 152 designated SKIP is coupled to the reset input R of flip-flop 150, and input of an AND gate 180, and to the input of the first stage 171 of a SKIP signal delay line 170. The Q output of flip-flop 154 is coupled to an input of an exclusive-OR gate 160, and to the data input of a D-type flip-flop 178. The $\overline{Q}$ output of flip-flop 154 is coupled to the data input of flip-flop 154. The second input of exclusive-OR gate 160 is coupled to receive the $F_{sc}$ clock signal, and produces a signal LINE at its output. The LINE signal is applied to the clock input of flip-flop 152.

The SKIP signal delay line 170 includes five serially coupled delayed stages 171—175, which are clocked by pulses of the $I_c$ and $-I_c$ clock signals applied by an OR gate 177. The output of the third delay stage 173 designated FSKIP is coupled to one input of an AND gate 190, which receives the I/Q CLOCK signal at its other input. The AND gate 190 produces an output signal identified as I/Q CLOCK$_F$. The output of the last delay stage 175 is coupled to the clock input of flip-flop 178 by an inverter 176. The Q output of flip-flop 178 is coupled to one input of an exclusive OR gate 164, which is also coupled to receive the $F_{sc}$ clock dignal. The exclusive-OR gate 164 produces a signal LINED, which is also produced in inverted form by an inverter 166.

The AND gate 180 is coupled to receive the I/Q CLOCK signal at its second input, and produces an output signal identified as I/Q CLOCK$_S$.

Three AND gates 182, 184 and 186 each have an input to the output of OR gate 177. The LINE signal is applied to a second input of AND gate 182, which produces the $I_{CL}$ clock signal for the $L_I$ latches of the bandpass filter as its output. The LINED signal is applied to the second input of AND gate 184, which produces the $I_4$ signal for the interpolator at its output. The $\overline{LINED}$ signal is applied to the second input of AND gate 186, which produces the $-I_4$ clock signal for the interpolator at its output.

Three AND gates 192, 194 and 196 each have an input coupled to the output of an OR gate 198. The OR gate 198 is coupled to receive the $Q_c$ clock signal at one input and the $-Q_c$ clock signal at a second input. The LINE signal is applied to a second input of AND gate 192 to produce the $Q_{CL}$ clock signal for the $L_Q$ latches of the bandpass filter. The LINED signal is applied to the second input of AND gate 194, which produces the $Q_4$ signal for the interpolator at its output. The $\overline{LINED}$ signal is applied to the second input of AND gate 196 to produce the $-Q_4$ signal for the interpolator. The output of OR gate 198 is also coupled by way of an inverter 156 to the reset input R of flip-flop 152.

The operation of the clock signal circuitry of Figure 9 may be understood by first assuming that flip-flops 150, 152 and 154 are all in a reset condition. With flip-flop 154 being reset, the LINE signal at the output of exclusive-OR gate 160 will be in phase with the $F_{sc}$ signal, as seen by comparing pulse 200 of Figure 10b with pulse 202 of Figure 10k. The pulses of the LINE signal of Figure 10k gate pulses 204 and 206 of the $I_c$ and $Q_c$ signals (Figures 10c and 10d) to the $L_I$ and $L_Q$ registers 40 of the bandpass filter by way of AND gates 182 and 192 to selectively load the latch registers at these times. This timing will load the latch register 40 at the times of occurrence of +I and +q signal samples of the incoming sample sequence, as seen by comparing Figures 10b and 10c with the sample sequence shown in Figure 10a. When the video signal is sampled by the A/D converter 10 at a $4f_{sc}$ rate, each horizontal line of an NTSC signal will be represented by 910 samples. The LINE signal will thus load the latch register 40 during the times of occurrence of the first and second samples of each group of four samples, including the 905th and 906th samples shown in Figure 10a.

The 910 samples of one line of the NTSC signal are aligned in time with $227\frac{1}{2}$ cycles of the $F_{sc}$ signal of Figure 10a. In order to operate the comb filter 20 substantially at a $2f_{sc}$ rate and to comb filter by combining vertically aligned samples from line-to-line, the extra half line of samples, shown as 909 and 910 in Figure 10a, are deleted from the comb filtering process. At this time, the phase of the LINE signal is reversed to select samples of opposite polarity of the new line for the comb filter. This results in a 454 stage comb filter 22 as shown in Figure 4.

The phase change is initiated by the leading edge of the horizontal blanking signal shown in Figure 10h, which sets flip-flop 150. The leading edge of the horizontal blanking signal is illustratively shown in Figure 10 to occur during sample 905 of Figure 10a where Figure 10a represents the sample sequence at the stage $\tau_4$ (center tap) of the bandpass filter. Flip-flop 150 applies a high signal to the data input of flip-flop 152, which is then set by the next leading edge 210 of the LINE signal, as shown in Figure 10k. The Q output of flip-flop 152 produces a $\overline{SKIP}$ pulse, shown in Figure 10i, which clocks flip-flop 154 to a set condition. The Q output of flip-flop 154, labelled CHANGE, changes state as shown in Figure 10j, which changes the phase of the LINE signal, as shown in Figure 10k. The LINE signal is now low during the occurrence of $I_c$ and $Q_c$ pulses 214 and 216, preventing loading of the latches 40 during samples 909 and 910 of Figure 10a. In addition, the SKIP pulse at the $\overline{Q}$ output of flip-flop 152 blocks the passage of I/Q CLOCK pulse 212 of Figure 10g through AND gate 180 so that the multiplexer 50 of Figure 2 will not change state during samples 909 and 910. The SKIP pulse also resets flip-flop 150, and is loaded into the first stage 171 of the SKIP signal delay line 170 by $I_c$ clock pulse 214. Flip-flop 152 is reset by $Q_c$ clock pulse 216, thus terminating the SKIP and $\overline{SKIP}$ pulses.

The new phase of the LINE signal will now load the latch registers 40 during the occurrence of $-I$ and $-Q$ samples. LINE pulse 224, for instance, will gate $-I_c$ and $-Q_c$ pulses 220 and 222 of Figures 9e and 9f to the latch registers by way of AND gates 182 and 192. Pulses 202 and 222 are seen to be coincident with $-I$ sample 1 and $-Q$ sample 2 of the new line of samples. These samples are vertically aligned with $+I$ and sample 1 and $+Q$ sample 2 of the previous horizontal line.

It is remembered from Figures 6d and 6e that two cycles of the I/Q CLOCK signal are required for the multiplexed signals to propagate through the bandpass filter of Figure 2 to the filter output latch $L_\Sigma$. Since no samples were loaded into the latches 40 of the filter during sample times 909 and 910, it is necessary to prevent operation of the $L_\Sigma$ latch at the time at which samples from times 909 and 910 would be expected to appear at the input of latch $L_\Sigma$. This is accomplished by the SKIP signal delay line, which clocks the SKIP signal to the output of stage 173 at this time. This signal, termed FSKIP in Figure 9, prevents the passage of an I/Q CLOCK pulse through AND gate 190 so that the $L_\Sigma$ latch, which is clock by signal I/Q CLOCK$_F$, is not latched when filtered sample 909 would be expected to appear at the output of the bandpass filter. The I/Q CLOCK$_F$ signal also clocks the comb filter delay line 20 of Figure 4, which similarly skips a clock cycle at this time.

After two more I/Q CLOCK cycles, the skipped sample interval will have reached the interpolator 16 of Figure 5. This requires a change of the phase of the $I_4$, $Q_4$, $-I_4$ and $-Q_4$ clocks of the interpolator. The SKIP pulse at this time is clocked to the output of the last stage 175 of the SKIP signal delay line 170. The SKIP pulse is inverted and clocks flip-flop 178 to load the CHANGE signal level into flip-flops 178. The CHANGE signal level then reverses the phase of the LINED and $\overline{LINED}$ signals at the outputs of exclusive-OR gate 164 and inverter 166, respectively. The LINED and $\overline{LINED}$ signals control AND gates 184, 194, 186 and 196, which generate the $I_4$, $Q_4$, $-I_4$, and $-Q_4$ clock signals. During the previous line, the $I_4$ signal and the $Q_4$ signal were in phase with $I_c$ and $Q_c$ clock signals to gate comb filtered $+I$ and $+Q$ signals through the interpolator gate 90. The $-I_4$ and $-Q_4$ signals were in phase with the $-I_c$ and $-Q_c$ clock signals to gate interpolated $-I$ and $-Q$ signals through gate 90. With the reversal of phase of the LINED and $\overline{LINED}$ signals, the $I_4$ and $Q_4$ clock signals will now be in phase with the $-I_c$ and $-Q_c$ clock signals to gate comb filtered $-I$ and $-Q$ samples through the interpolator, and the $-I_4$ and $-Q_4$ clock signals are in phase with the $I_c$ and $Q_c$ clock signals to gate interpolated $+I$ and $+Q$ samples through gate 90. The interpolator will therefore gate properly phased samples to subtractor 18 for comb filtering of the luminance signal.

The right-hand waveform of Figure 10 show that similar clock signal phase reversals occur at the end of the new horizontal line, during which time the CHANGE signal of Figure 10j is changed to its reset condition.

Analysis of the illustrated embodiment of the present invention has shown that erroneous interpolated samples are produced at the time of clock phase changes from one line to the next. This is because samples of one line are combined with improper samples of the adjacent line by the interpolator. Specifically, the last two interpolated samples of the ending line and the first two interpolated samples of the new line will be in error, which span a time interval of six $4F_{SC}$ clock cycles, beginning at the changing of the CHANGE signal of Figure 10j. By comparing Figure 10h with Figure 10j and Figure 10a, it is seen that approximately four sample intervals (i.e., four $4F_{SC}$ clock cycles) occur between the leading edge of horizontal blanking and change of the CHANGE signal. Thus, a total of ten cycles of the $4F_{SC}$ clock pass between the leading edge of the horizontal blanking pulse and the time at which a steady stream of correct samples resumes. In the NTSC system, this is a time interval of approximately 700 nanoseconds. Since the "front porch" of the horizontal blanking interval which precedes the horizontal sync pulse has a minimum duration of approximately 1.27 microseconds, it is seen that the erroneous samples will have passed through the system before the time of occurrence of the horizontal sync pulse, which is the next video information signal which must be accurately reproduced.

Moreover, by effecting the clock phase reversal during the beginning of the horizontal blanking interval, the changeover occurs during a time at which no chrominance information is being transmitted. Thus, the outputs of the bandpass filter and the comb filter will contain substantially no chrominance signal information and essentially zero level signals will be produced by the comb filter. The interpolation process will then be performed entirely with zero level signals and will cause no erroneous results when the zero level signals are introduced into the luminance channel for luminance signal combing.

An important aspect of the present invention is the ability to comb filter the chrominance signals at a sampling frequency which is less than the sampling frequency of the A/D converter. In the embodiment of Figure 4, the comb filter sampling frequency is $2f_{sc}$, or approximately 7.16 MHz in the NTSC system. Since the NTSC chrominance signal bandwidth extends from approximately 2.1 MHz to 4.2 MHz, it would ordinarily be anticipated that sampling at 7.16 MHz would cause aliasing around the 3.58 MHz color subcarrier frequency. Note, however, that each of the processed samples was originally sampled at a rate that satisfies the Nyquist criterion and from line to line corresponding samples have a precise phase relationship. If the combing function is evaluated in the time domain, it is recognized that the samples of one line are subtracted from corresponding samples of an adjacent line sampled at precisely the same point in their respective lines.

Like components of luminance signal occurring in the band passed samples of adjacent lines are removed by the subtractive process. Further, with respect to the chrominance component of the band passed samples, because the subsampling clocks are locked to the chrominance carrier, the aliasing concept in general does not apply. Sampling the modulated carrier, at the carrier frequency, at the same phase position each cycle satisfies the Nyquist criterion with respect to the chrominance signal and aliasing components are not generated.

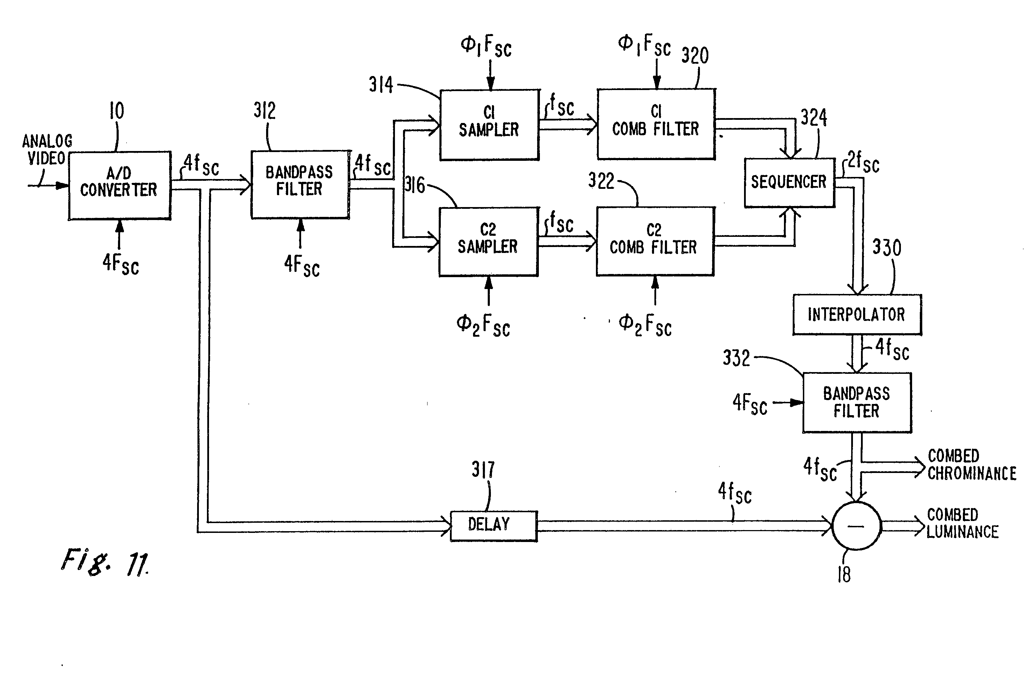

In Figure 11 another embodiment of a signal separation system according to the principles of the present invention is shown. Elements shown and discussed in conjunction with the embodiment of Figure 1 are shown in the embodiment of Figure 11, bear the same reference numerals, and perform the same function.

The $4f_{sc}$ rate digital samples produced by the A/D converter 10 are applied to inputs of a delay stage 317 and a digital bandpass filter 312. The passband of the bandpass filter 312 of NTSC video signals includes the chrominance frequencies which are distributed about the 3.58 MHz color subcarrier frequency. The delay stages 317 provides an equalizing delay which matches the delays encountered by signals between the input of bandpass filter 312 and the output of a bandpass filter 332.

Bandpass filtered signals at a $4f_{sc}$ rate sequence are produced at the output of the bandpass filter 312. This sequence is subsampled by a C1 sampler 314 and a C2 sampler 316, which pass samples at two different phases of an $4f_{sc}$ rate signal, respectively. The samplers thus subsample the $4f_{sc}$ rate sequence at a color subcarrier ($f_{sc}$) rate in response to the differently phased sampling signals $\phi_1 F_{sc}$ and $\phi_2 F_{sc}$.

Output signals from the samples 314 and 316 are applied to a C1 comb filter 320 and a C2 comb filter 322, respectively. The comb filters 320 and 322 comb filter the applied signals, producing comb-filtered samples at an $f_{sc}$ rate. The comb filters are respectively clocked by the same $\phi_1 f_{sc}$ and $\phi_2 F_{sc}$ sampling signals at the samplers. The output samples of the comb filters are then combined in an interleaved sequence of samples at a $2f_{sc}$ rate by sequencer 324. This sample sequence is then applied to an interpolator 330, which produces a sequence of samples at the original rate of $4f_{sc}$. This sample sequence is filtered by a bandpass filter 332 so as to pass only samples in a given passband of comb-filtered samples. The bandpass-filtered samples are then subtracted from the delayed composite video signal sample sequence passed by the delay stage 317, resulting in the production of a second sequence of comb-filtered samples. In the embodiment of Figure 11, comb-filtered chrominance signals in the chrominance passband are produced at the output of the bandpass filter 332. These signals are then subtracted from the composite video signal in subtractor 18 to produce comb filtered luminance signals.

The arrangement of Figure 11 is advantageous in that the differently phased comb filters 320 and 322 are operated at the subcarrier frequency. For NTSC signal samples, each comb filter will include a one-H delay line clocked at the subcarrier frequency of approximately 3.58 MHz, resulting in a one-H delay line length of 227 stages per filter. For example, if the samples applied to the comb filters are eight bits in length, each one-H delay line will require only 1816 storage locations, or a total of 3632 storage locations for both comb filters. This compares favorably with the 7820 storage locations required for a comb filter operating on eight-bit samples at a $4f_{sc}$ rate. Design of the system is simplified in that the two bandpass filters 312 and 332 can be FIR filters of the same order using the same weighting coefficients. In addition, the bandpass filter 332 may be arranged to provide the interpolation function, as will be subsequently described.

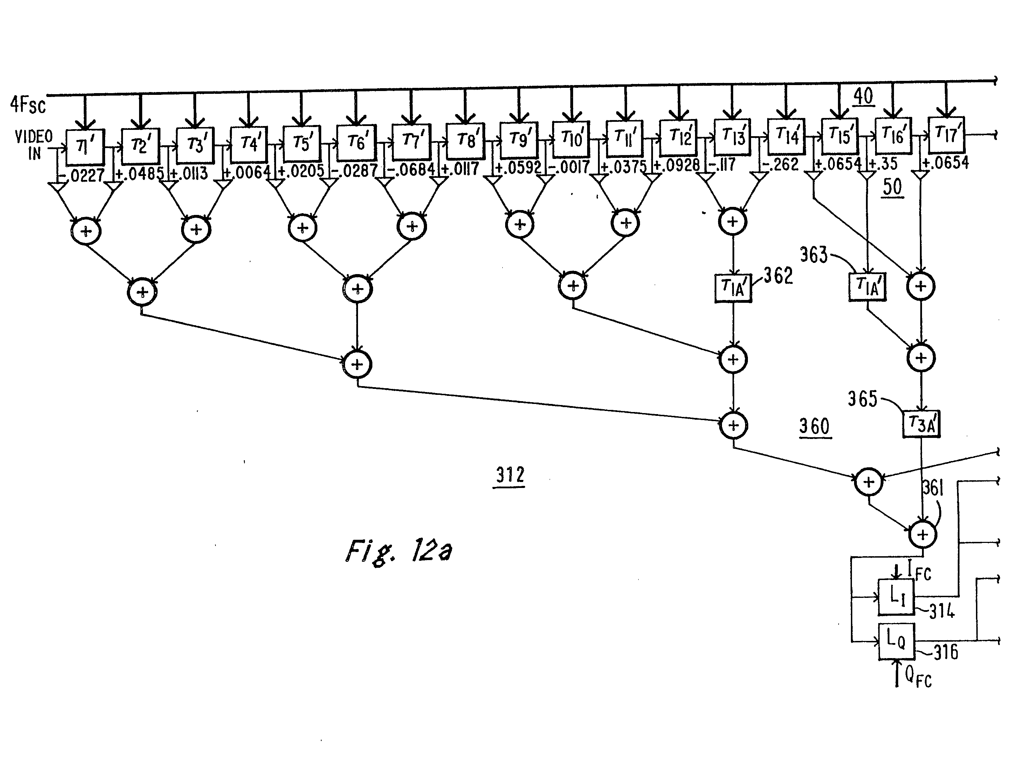

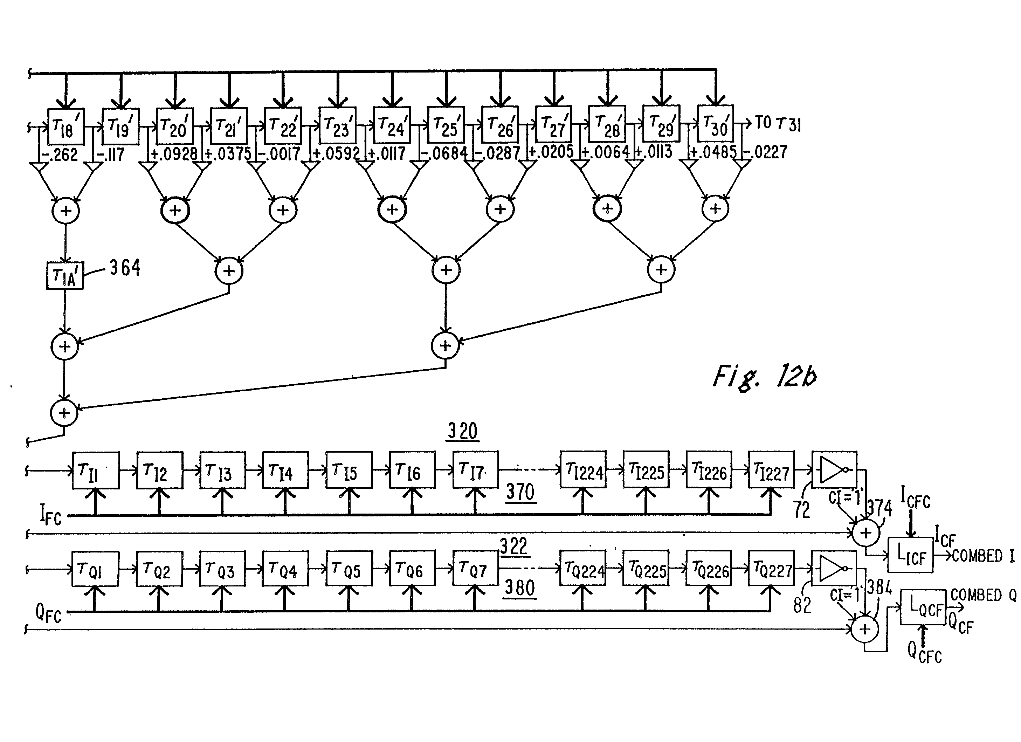

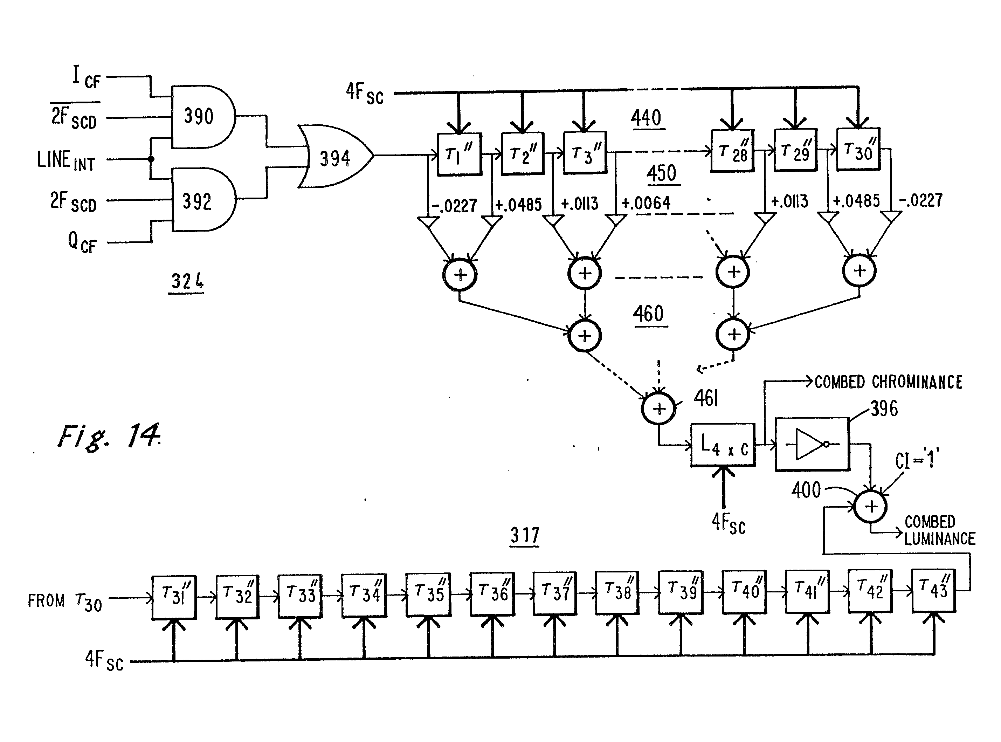

A digital bandpass filter suitable for use as bandpass filter 312 in the embodiment of Figure 11 is shown in detail in Figures 12a and 12b, which interconnect at the broken connections at the sides of the Figures. In Figures 12a, 12b and 14, thin lines depict data paths for multibit samples and broad lines depict clock signal paths.

The bandpass filter of Figures 12 and 12b comprises a 31-stage output tapped FIR filter, including a shift register 340 of thirty delay elements $\tau'_1$—$\tau'_{30}$, thirty-one coefficient weighting circuits 350, and an adder tree 360. Samples of the video signal produced by the A/D converter are applied to the input of the first stage $\tau'_1$ of the shift register 340, and are shifted through the register by a $4F_{sc}$ clock signal. Samples are tapped from the input of the first stage and the output of each stage of the shift register and are applied to the coefficient weighting circuits 350. Precise coefficient values are shown in Figures 12a and 12b (−.0277, +.0485, +.0113, etc.), which may be implemented using coefficient multiplier circuits which multiply each tapped signal by the appropriate coefficient value. If desired, the coefficient weighting circuits can also be implemented using a shift-and-add technique by rounding off the coefficient values to the nearest multiple of an inverse power of two. For instance, the weighting coefficient at the output of stage $\tau'_1$ has a value of +.0485. The nearest multiple of an inverse power of two is 3/64, which is equal to .046875. Weighting by this value is achieved by shifting the tapped signal to the right by six places, which weights the tapped signal by 1/64, and by shifting the tapped signal to the right by five places, which weights the signal by 1/32. The two shifted signals are then added to produce a value equal to 3/64 times the tapped signal. Circuitry for performing the shift-and-add function is shown in United States patent application number 363,827, entitled "Digital Filter Circuits" by Lauren A. Christopher, filed March 31, 1982. (GB—A—2104695).

The tapped and weighted signals are applied to the adder tree 360, in which they are combined by the adders to produce a filtered signal at the output of the final adder 361. It is essential that the tapped and weighted signals all arrive at the output of the final adder 361 at the same time. To insure that this will happen, each signal from a coefficient weighting circuit is routed to the output through six adders, or delays equivalent to six adders. It may be seen that tapped signals from shift register stages $\tau'_{12}$—$\tau'_{18}$ encounter fewer than six adders on their passage from the coefficient weighting circuits to the output of adder 361. To equalize the propagation delays of these signal paths with respect to the remaining signal paths, delays 362—364 equivalent to the propagation time of one adder tree type and a delay 365 equivalent to the propagation time of three adders are inserted into these shorter paths. Thus, the adder tree will delay each tapped and weighted signal by the propagation time of six adders between the coefficient weighting circuits and the output of adder 361.

The filtered signals at the output of adder 361 are selectively sampled by latches $L_I$ and $L_Q$ in response to clock signals $I_{FC}$ and $Q_{FC}$. The $I_{FC}$ and $Q_{FC}$ clock signals each have a frequency of $f_{sc}$ (3.58 MHz in the NTSC system) to sample one of every four filtered signal samples. The $I_{FC}$ and $Q_{FC}$ clock signals also sample the filtered signals at respectively different phases of the color subcarrier signal and in this embodiment exhibit a 90° phase relationship with respect to each other.

The signal samples in the $L_I$ and $L_Q$ latches are then applied to two comb filters 320 and 322. Each comb filter includes a 227 stage delay line 370 and 380, which delays the applied signals by one horizontal line interval. The delay lines 370 and 380 are clocked by the same $I_{FC}$ and $Q_{FC}$ clock signals that are used by the $L_I$ and $L_Q$ latches. The bits of the delayed samples are inverted, or one's complemented by inverting circuits 372 and 382 and applied to inputs of respective adders 374 and 384. Respective undelayed signals are also applied to the adders 374 and 384. A least significant "carry-in" bit CI equal to '1' is also applied to each adder which, together with the one's complement of the delayed samples, accomplishes a two's complementing or arithmetic negating of the delayed signals for subtraction. The adders 374 and 384 will thereby effectively subtract the delayed samples from the undelayed samples to produce comb filtered signals at their outputs. These comb filtered signals are latched into respective latches $L_{ICF}$ and $L_{QCF}$ by differently phased $f_{sc}$ rate clock signals $I_{CFC}$ and $Q_{CFC}$. Thus, sequences $I_{CF}$ and $Q_{CF}$ of comb filtered signal samples are produced at the outputs of latches $L_{ICF}$ and $L_{OCF}$. These signal samples are available for subsequent processing in a chrominance signal processor to produce demodulated color mixture signals.

In Figure 14, the comb filtered chrominance signal sequences $I_{CF}$ and $Q_{CF}$ are used to produce a comb filtered luminance signal. The outputs of the $L_{ICF}$ and $L_{QCF}$ latches are coupled to inputs of respective AND gates 390 and 392. The AND gates 390 and 392 are also coupled to receive complementary clock signals $\overline{2F_{SCD}}$ and $2F_{SCD}$, respectively. A third clock signal, $LINE_{INT}$, is applied to third inputs of AND gates 390 and 392. The outputs of AND gates 390 and 392 are coupled to the inputs of an OR gate 394, the output of which is coupled to the input of a bandpass filter.

The purpose of the bandpuss filter of Figure 14 is to create a sequence of comb filtered chrominance signals in the chrominance passband at a $4f_{sc}$ clock rate. The bandpass filter of Figure 14 is constructed in the same manner as the input bandpass filter of Figure 12, being of the same filter order with the same weighting coefficient values. The bandpass filter of Figure 14 includes a thirty stage shift register 440, thirty-one coefficient weighting circuits 450, and an adder tree 460 having a final output adder 461. For ease of illustration, only a portion of these circuit elements are shown in Figure 14.

The shift register 440 of the bandpass filter is clocked at a $4f_{sc}$ rate by the $4F_{sc}$ clock signal. Bandpass filtered output signals from the final adder 461 are latched into latch $L_{4xC}$ by the $4F_{sc}$ clock signal. The $4f_{sc}$ rate sample sequence produced by latch $L_{4xC}$ comprises comb filtered chrominance information in the chrominance passband, which is also available for subsequent demodulation and processing. The bits of each sample in the $4f_{sc}$ rate sequence are one's complemented, or inverted, by an inverting circuit 396. The one's complemented samples are applied to an adder 400 together with a carry-in bit CI equal to '1' to form two's complemented or arithmetically negated chrominance signals for subtraction from the composite video signal. Composite video signal samples are applied to a second input of the adder 400 by way of a fifteen stage shift register delay line 398 having the input to the first stage $\tau''_{31}$ coupled to the output of the shift register 340 of the input bandpass filter. The shift register 398 is clocked by the $4F_{sc}$ clock signal and acts to present composite video signal samples to the adder 400 in time coincidence with corresponding comb filtered chrominance signal samples. The adder 400 thus produces a comb filtered luminance signal which has been combed over the chrominance passband. The comb filtered luminance signal is available at the output of adder 400 for subsequent luminance signal processing.

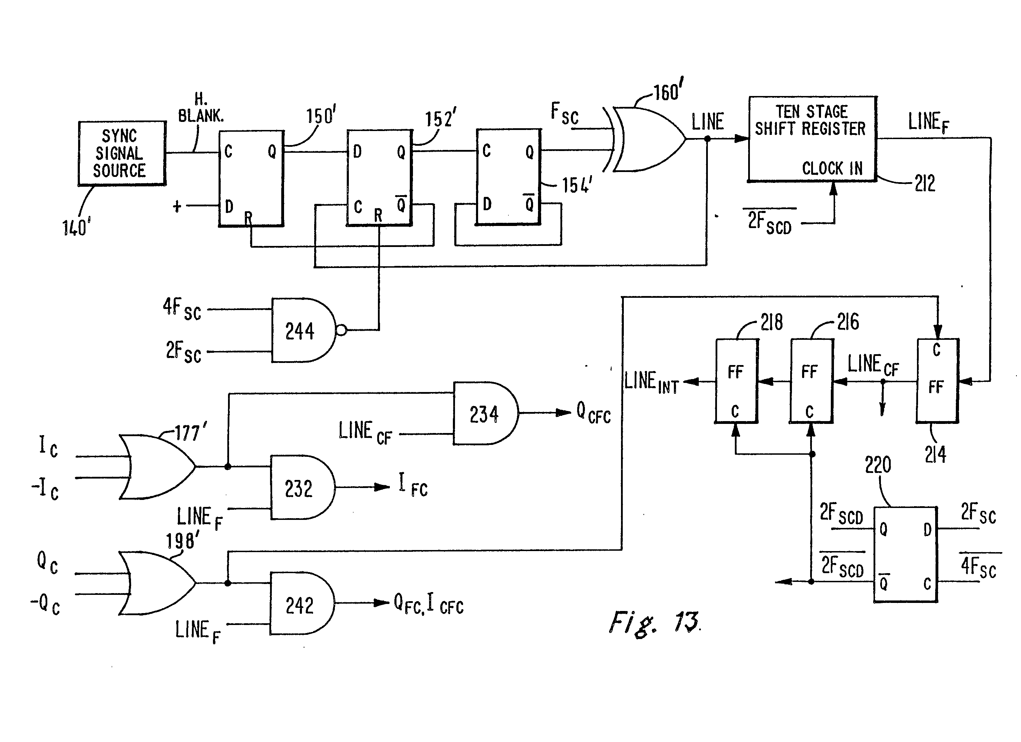

Clock signals for the embodiment of Figures 12 and 14 are produced by the clock generating circuitry of Figures 7 and 13. Figure 7 (described above) supplies signals to the generator circuitry of Figure 13. The clock generator of Figure 13 is similar to that of Figure 9.

As discussed in conjunction with Figures 7 and 9, the various sampling clocks must be appropriately phased for proper operation in an N.T.S.C. system. Clock circuitry which performs the necessary phase shifts of the clock signals from one line to another is shown in Figure 13. In Figure 13 a synchronizing signal source 140' produces a horizontal blanking signal, which is applied to the clock input of a D-type flip-flop 150°. The data input of flip-flop 150' is coupled to a source of logical one level voltage (+). The Q output of flip-flop 150' is coupled to the data input of a D-type flip-flop 152'. The Q output of flip-flop 152' is coupled to the clock input of a D-type flip-flop 154' and the $\overline{Q}$ output of flip-flop 152' is coupled to the reset input R of flip-flop 150'. The Q output of flip-flop 154' is coupled to an input of an exclusive-OR gate 160'. The $\overline{Q}$ output of flip-flop 154' is coupled to the data input of flip-flop 154'. The second input of exclusive-OR gate 160' is coupled to receive the $F_{sc}$ clock signal, and produces a signal LINE at its output. The LINE signal at the output of exclusive-OR gate 160' is applied to the input stage of a ten-stage shift register 212. The shift register 212 is clocked by a signal $\overline{2F_{SCD}}$, which is a phase-shifted replica of the $2F_{sc}$ signal of Figure 8c.

A signal $LINE_F$ is produced at the output of the shift register 212 and is applied to the input of a flip-flop 214. The output of flip-flop 214, which produces a signal termed $LINE_{CF}$, is applied to the input of a flip-flop 216, the output of which is coupled to the input of a further flip-flop 218. Flip-flops 216 and 218 are clocked by the $\overline{2F_{SCD}}$ clock signal produced at the $\overline{Q}$ output of a D-type flip-flop 220. The flip-flop 220 receives the $2F_{sc}$ signal at its data input and the $\overline{4F_{sc}}$ clock signal at its clock input.

The $I_c$ and $-I_c$ signals are applied to the inputs of an OR gate 177. The output of OR gate 177' is coupled to inputs of AND gates 232 and 234. The $LINE_F$ signal is applied to the second input of AND gate 232, which produces a signal $I_{FC}$ at its output. The $LINE_{CF}$ signal is applied to the second input of AND gate 234 to produce a signal $Q_{CFC}$ at the output of that gate.

The $Q_c$ and $-Q_c$ signals are applied to the inputs of an OR gate 198'. The output of OR gate 198' is coupled to an input of an AND gate 242. The signal produced at the output of OR gate 240 is also used to clock flip-flop 214. The $LINE_F$ signal is applied to a second input of AND gate 242, which produces a signal identified as $Q_{FC}$ and $I_{CFC}$ at its output.

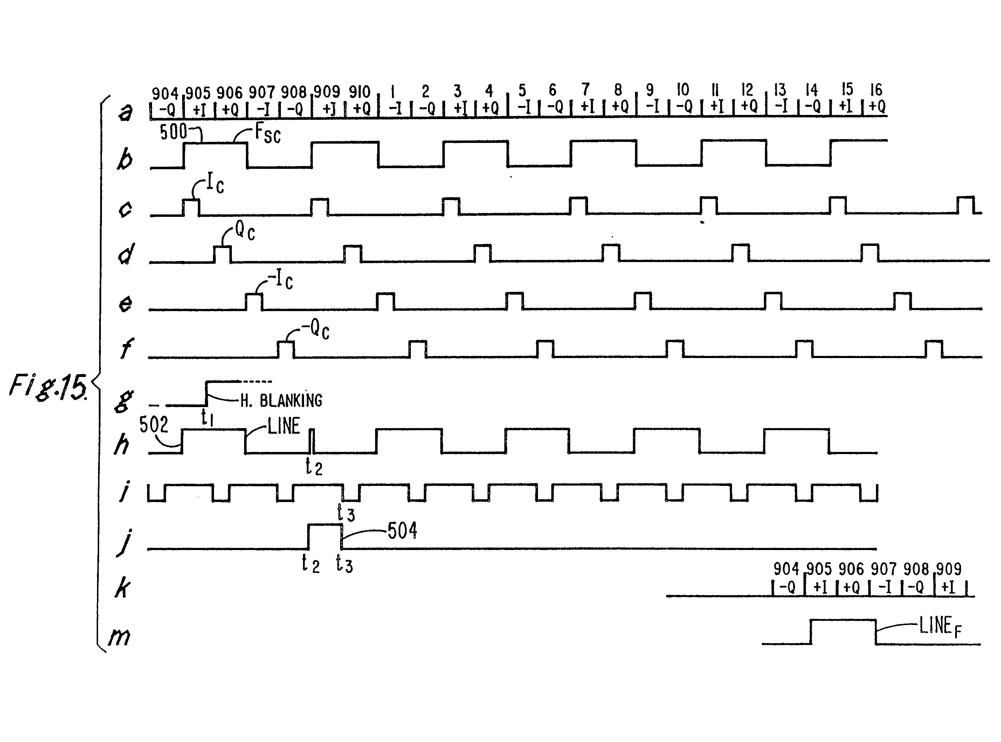

When the A/D converter of Figure 11 samples the composite video signal at a $4f_{sc}$ rate, each line of the NTSC signal will comprise 910 samples. Figure 15a illustrates the last seven samples of one line of information, which line begins with a +I sample (not shown) and ends with a +Q sample 910. The succeeding line begins with a −I sample 1, and ends with a −Q sample (not shown). The reversal of the clock phasing for proper comb filtering is done during the last two samples of each line, and is initiated by the leading edge of the horizontal blanking signal shown in Figure 15g. The sample sequence of Figure 15a represent the samples at the input to the bandpass filter shift register 40 of Figure 12.

Initially it will be assumed that flip-flops 150', 152' and 154' are all reset. Under these conditions, the LINE signal at the output of exclusive-OR gate 160' will be in phase with the $F_{sc}$ signal, as seen by comparing pulse 500 of Figure 15b with pulse 502 of the LINE signal of Figure 15h. The leading edge of the horizontal blanking signal of Figure 15g, illustratively shown to occur during codeword 905 of the line that is ending, sets flip-flop 150' at time $t_1$ in Figure 15g. The next rising edge of the LINE signal occurs at time $t_2$ in Figure 15h, which will set flip-flop 152' at that time. The signal at the Q output of flip-flop 152' is shown in Figure 15j.

The setting of flip-flop 152' in turn sets flip-flop 154', causing the signal at its Q output to go high. This results in a reversal of the phase of the LINE signal following time $t_2$, as shown in Figure 15h. The pulses of the LINE signal are now coincident with pulses of the $-I_c$ and $-Q_c$ clock signals of Figures 15e and 15f, whereas previously they were coincident with the $I_c$ and $Q_c$ pulses of Figures 15c and 15d. Flip-flop 150' is reset at time $t_2$ by, the low-going signal at the $\overline{Q}$ output of flip-flop 152', and flip-flop 152' is reset at time $t_3$ by a low-going signal (shown in Figure 15i) produced by a NAND gate 244, which is coupled to receive the $4F_{sc}$ and $\overline{2F_{sc}}$ clock signals.

At the time that the LINE signal changes phase, no immediate change in system operation occurs, since the final samples of the ending line are just entering the shift register 340 of the input bandpass filter of Figure 12. Fifteen cycles of the $4F_{sc}$ clock are required for the samples to reach the impulse response center of the bandpass filter at the output of shift register stage $\tau_{15}$. Tapped signals must then propagate through the coefficient weighting circuits 350 and the adder tree 360 before the filtered signal is available to be latched into the $L_I$ and $L_Q$ latches. For purposes of illustration, it is assumed that the coefficient weighting circuits 350 each exhibit a propagation time of 66 nanoseconds, and that each adder in the adder tree exhibits a propagation time of 40 nanoseconds. Since each tapped signal in the bandpass filter must pass through one coefficient weighting circuit and six adder delays, the tapped signals are delayed by approximately 306 nanoseconds between the outputs of the shift register stages 340 and the output of the final adder 361. Thus, filtered samples appear at the output of adder 361 in the sequence shown in Figure 15k with respect to the bandpass filter input sample sequence shown in Figure 15a. The sample sequence of Figure 15 is delayed with respect to the sample sequence of Figure 15a by more than 19 cycles of the $4F_{sc}$ clock.

At the same time as the samples at the end of the line are propagating through the bandpass filter, the LINE signal is being shifted through the ten stage shift register 212 of Figure 13 by the

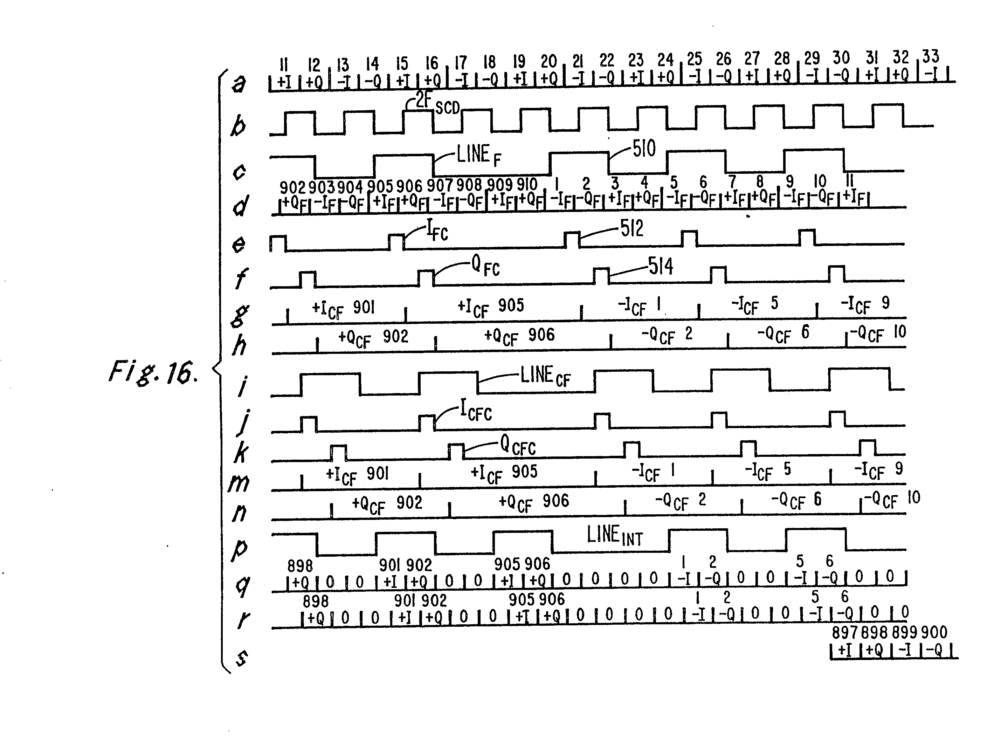

$2\overline{F}_{SCD}$ clock signal. A delayed LINE signal, termed $LINE_F$, is produced at the output of shift register 212 and is shown in Figures 15m and 16c. The input sample sequence of Figure 15a is redrawn in Figure 16a the filtered sample sequence of Figure 15k is shown again in Figure 16d, and the $2F_{SCD}$ clock signal is shown in Figure 16b.

During the occurrence of positive filtered I and Q samples of the ending line, such as $+I_F$ sample 905 and $+Q_F$ sample 906 of Figure 16d, the high $LINE_F$ signal of Figure 16c gates sampling pulses through AND gates 232 and 242 of Figure 13. These pulses, identified as $I_{FC}$ and $Q_{FC}$ in Figures 16e and 16f, load the $+I_F$ and $+Q_F$ samples into latches $L_I$ and $L_Q$, respectively. During the occurrence of filtered negative I and Q samples of the new video line, such as $-I_F$ sample 1 and $-Q_F$ sample 2 of Figure 16d, the phase of the $LINE_F$ signal has changed so that the $LINE_F$ signal is high during these negative signal samples. During the new line, $LINE_F$ pulse 510 will gate sampling pulses 512 and 514 of the $I_{FC}$ and $Q_{FC}$ clock signals to latches $L_I$ and $L_Q$ to clock the negative sample into the latches. The latched samples thus alternate between positive samples on one line and negative samples on the following line.

The $I_{FC}$ and $Q_{FC}$ signals also clock the comb filter delay line registers 370 and 380 of Figure 12b. The samples at the outputs of the respective latches and delay line registers are of opposite polarity, and are subtractively combined in adders 374 and 384. The adders 374 and 384 are also assumed to exhibit propagation delays of 40 nanoseconds, and produce sequences of comb filtered samples shown in respective Figures 16g and 16h, delayed with respect to clock signals $I_{FC}$ and $Q_{FC}$ by the 40 nanosecond adder delay. The further delayed LINE signal produced by flip-flop 214 of Figure 13, identified as the $LINE_{CF}$ signal shown in Figure 16i, gates pulses $Q_{CFC}$ of Figure 16k through AND gate 242. The $I_{CFC}$ and $Q_{CFC}$ pulses of Figures 16j and 16k load the comb filtered samples of Figures 16g and 16h into latches $L_{ICF}$ and $L_{QCF}$ of Figure 12b, producing the comb filtered sequences of Figures 16m and 16n at the outputs of these latches.

The comb filtered samples are now interpolated to a $4f_{sc}$ rate sample sequence by the arrangement of Figure 14. The $LINE_{CF}$ signal of Figure 16i is delayed by flip-flops 216 and 218 of Figure 13 to produce a signal $LINE_{INT}$ of Figure 16p. The $LINE_{INT}$ signal is applied to AND gates 390 and 392 of Figure 6 to allow passage of positive samples through the gates during one line of video information, and negative samples through the gates during the following line. When the $2F_{SCD}$ signal of Figure 16b is low (and the $\overline{2F}_{SCD}$ signal is high), a comb filtered $I_{CF}$ sample is passed by AND gate 390 and appears at the output of OR gate 394, as shown by the $+I$ and $-I$ sample intervals of Figure 16q. When the $2F_{SCD}$ signal is high, a comb filtered $Q_{CF}$ sample is passed by AND gate 392 and appears at the output of OR gate 394, as shown by the $+Q$ and $-Q$ sample intervals of Figure 16q. And when the $LINE_{INT}$

signal is low, a zero value signal level is produced at the output of OR gate 394, as indicated by the zero value intervals of Figure 16q.

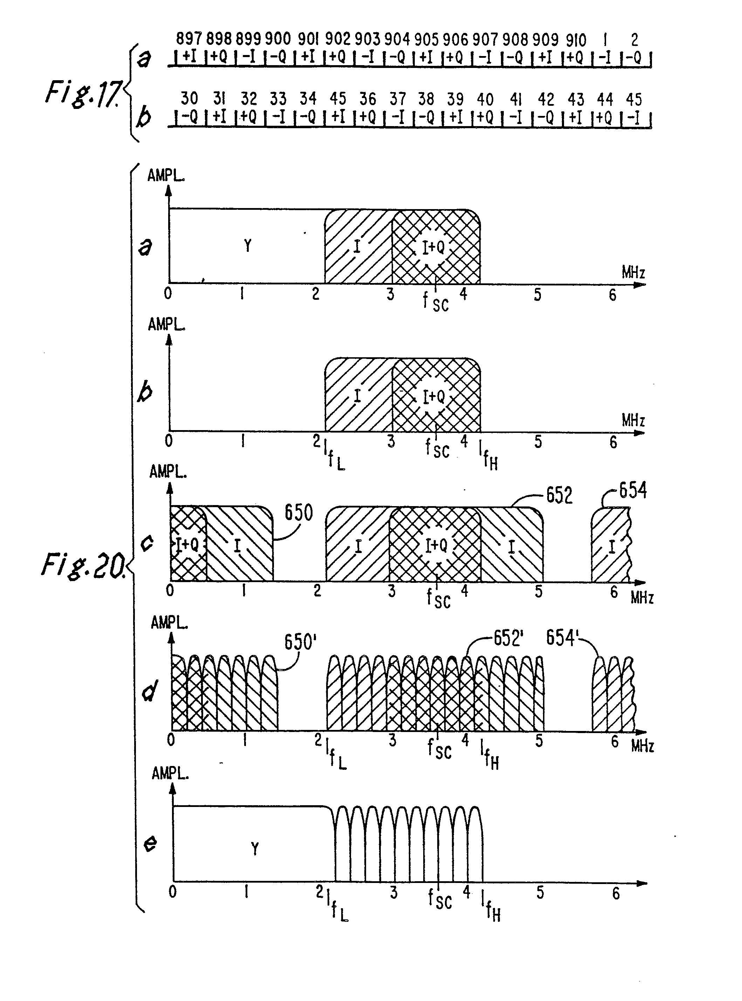

The output sequence of OR gate 394 is shifted into the shift register 440 of the output bandpass filter of Figure 14 by the $4F_{sc}$ clock signal. The sequence appearing at the output of the first stage $\tau''_1$ of register 440 is shown in Figure 16r. The output bandpass filter delays the applied signal in the same manner as the input bandpass filter of Figure 12 by the time required for the samples to reach the impulse response center (center tap) of the filter and then to propagate through the coefficient weighting circuits 450 and the adder tree 460. By virtue of the polarity and magnitude of the coefficient values, the output bandpass filter interpolates $-I$ and $-Q$ values in the zero signal intervals of the ending line, and $+I$ and $+Q$ values in the zero signal intervals of the new line. The sequence at the output of the final adder 461 is latched into the output latch $L_{4xC}$ by the $4f_{sc}$ clock signal, producing a $4f_{sc}$ rate output sequence of samples shown in Figures 16s and 17a. This sequence comprises comb filtered chrominance signals in the chrominance passband defined by the bandpass filter response.

The comb filtered chrominance signal is then subtractively combined with the composite video signal to produce a luminance signal which is devoid of chrominance components. The composite video signal sample sequence at the input to the system is redrawn as Figure 17b, and is seen to lead the comb filtered chrominance sequence by 43 cycles of the $4F_{sc}$ clock signal. For proper combing, the composite video sequence must be brought into time coincidence with corresponding samples of the chrominance sequence. This is done by delaying the input composite video sequence by 43 cycles of the $4F_{sc}$ clock. A thirty clock cycle delay is provided by the shift register 340 of the input bandpass filter, which produces a composite video signal sequence at the output of stage $\tau''_{30}$ delayed by thirty clock cycles with respect to the input sequence. The remaining thirteen cycles of delay are provided by shift register delay line 317 of Figure 14, which is also clocked by the $4F_{sc}$ clock. Thus, the sample sequences at the inputs of the adder 400 are in the proper time alignment for the production of a comb filtered luminance signal. It is seen in Figure 16q that two zero value samples are interspaced between each pair of I and Q samples that are applied to the output bandpass filter, except at the end of the line when the LINE signal phase is changed. At that point there are four consecutive zero value samples. It might be expected that this change of the sample sequence would cause an error in the reconstituted chrominance signal, and hence an error in the comb filtered luminance signal. However, since the phase change is initiated by the horizontal blanking signal, the phase change occurs during the "front porch" interval of the horizontal blanking interval. At this point in the video signal there is no chrominance signal content, and hence the true chrominance signal values are zero. Thus, the insertion of zero values into the sample sequence at this point will cause no errors in the resulting comb filtered signals.

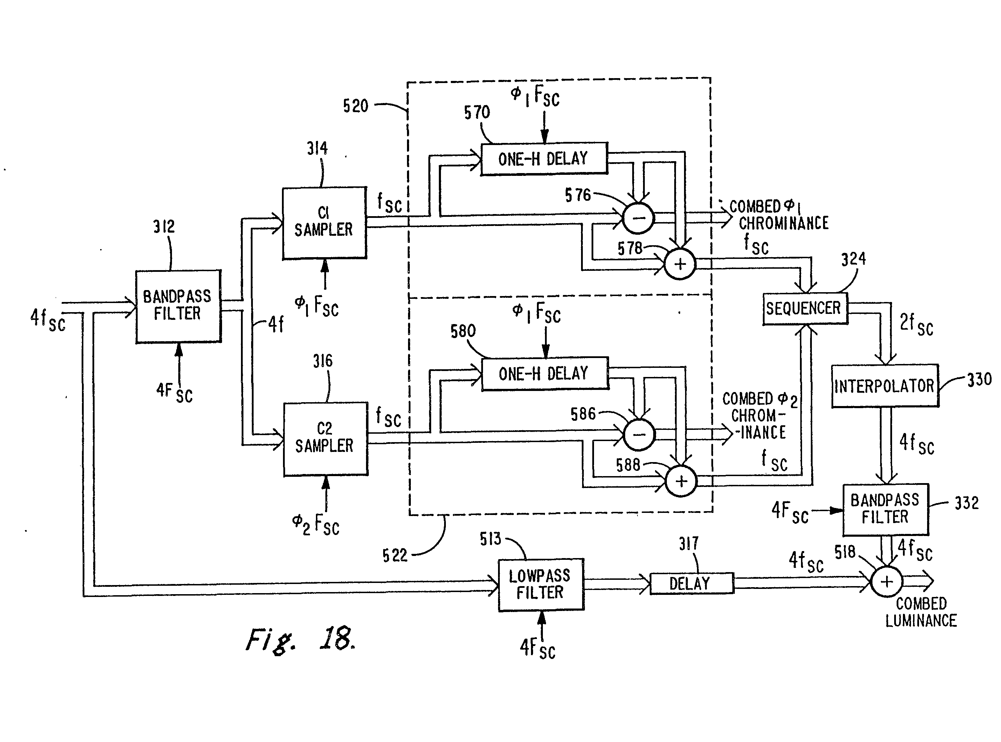

A second embodiment of the present invention is illustrated in Figure 18. Elements shown and discussed in conjunction with the embodiment of Figure 11 are shown in the embodiment of Figure 18 and bear the same reference numerals. Whereas a comb filtered luminance signal was produced in Figure 11 by first comb filtering the chrominance signal, then subtracting the comb filtered chrominance signal from the composite signal, the comb filtered luminance signal in Figure 18 is produced by comb filtering a high frequency portion of the composite video signal to produce a comb filtered high frequency luminance signal portion, then adding this signal portion to a low pass filtered portion of the composite signal.

In Figure 18, the composite video signal is first filtered by a bandpass filter 312, leaving a passband occupying frequencies about the color subcarrier frequency. The bandpass filtered signal is then subsampled by C1 and C2 samplers 314 and 316, in the same manner as Figure 11. Signal components produced by the C1 sampler 314 are applied to a first comb filter 520, and signal components produced by the C2 samples 316 are applied to a second comb filter 522. Both subsampled signal sequences are produced at an $f_{sc}$ rate, but are in respectively different phase relationships with respect to the subcarrier signal phase, since they are produced by sampling signals $\phi_1 F_{sc}$ and $\phi_2 F_{sc}$.

The signal sequence produced by the C1 sampler 314 is applied directly to inputs of an additive combining circuit 578 and a subtractive combining circuit 576, and is applied by way of a one-H delay line 570 to second inputs of the additive and subtractive combining circuits. The one-H delay line 570 is constructed in the same manner as the shift register delay line 370 of Figure 12.

The signal sequence produced by the C2 sampler 16 is applied to inputs of a one-H delay line 580, an additive combining circuit 588, and a subtractive combining circuit 586. The output of the one-H delay line 580 is coupled to second inputs of the additive and subtractive combining circuit 588 and 586.

Circuits 576 and 586 subtractively combine delayed and undelayed samples to produce comb filtered chrominance signal sequence at two phases $\phi_1$ and $\phi_2$ of the color subcarrier ($F_{sc}$) signal, in the same manner as adders 374 and 384 of Figure 12b. Circuits 578 and 588, by additively combining the delayed and undelayed sample sequences, produce samples in which the chrominance components have been cancelled, leaving comb filtered luminance signal components of two different subsampling phases of the $4f_{sc}$ A/D converter clock. These comb filtered luminance signal samples occupy the passband established by the bandpass filter 312 and are therefore high frequency luminance signal components.

The differently phased luminance samples produced by additive combining circuits 378 and 388 are interleaved in a single sample sequence by a sequencer 324, which sample sequence is at a $2f_{sc}$ rate. The $2f_{sc}$ sample sequence is interpolated by interpolator 330 to a $4f_{sc}$ rate and filtered by a bandpass filter 332, which produces a $4f_{sc}$ rate sequence of samples occupying the passband of bandpass filter 332. The sequencer 324, interpolator 330 and bandpass filter 332 may be implemented in the same manner as the like elements in Figure 11, using the configuration shown in Figure 14. The $4f_{sc}$ rate comb filtered luminance signal sequence is applied to one input of an adder 518.

The original composite video signal samples that are applied to the bandpass filter 312 are also applied to a lowpass filter 513, which is clocked by the $4F_{sc}$ clock signal. The lowpass filter 513 has a complementary frequency response to that of the bandpass filter 312. That is, the transition bands of the two filters are equal but opposite, intersecting approximately at the 6dB point. The lowpass filtered samples are delayed by delay line 17 to bring the samples into time coincidence with corresponding samples produced by the bandpass filter 332. The delayed samples which occupy the low frequency portion of the spectrum, are additively combined with high frequency, comb filtered luminance signals from bandpass filter 332 by adder 518, thereby producing a luminance signal which is comb filtered over that portion of the spectrum formerly occupied by the chrominance information.

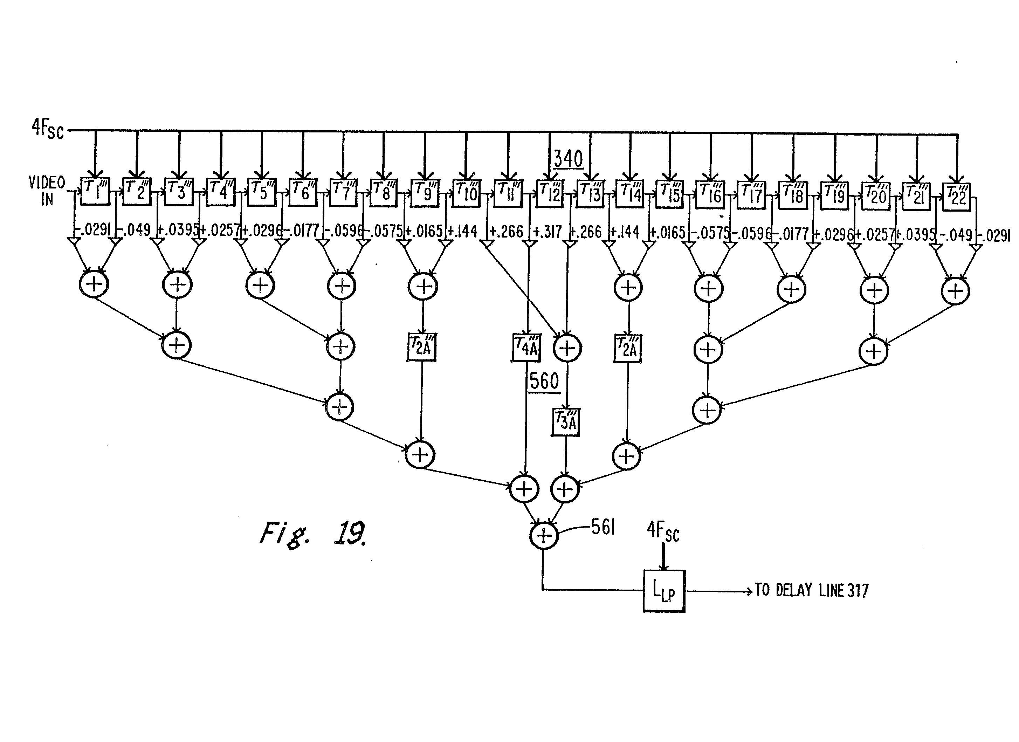

A digital lowpass filter, suitable for use as lowpass filter 13 in Figure 18, is shown in detail in Figure 19. The composite video signal samples are applied to the first stage $\tau_1$ of a twenty-two stage shift register 540. The input of the first stage and the outputs of all the stages are coupled to respective coefficient weighting circuits 550. Signals tapped from the shift register 540 are weighted by the coefficient weighting circuits and the tap-weighted signals are combined by an adder tree 560. The adder tree 560 includes delays shown at $\tau_{2A}''$, $\tau_{3A}''$ and $\tau_{4A}''$ exhibiting delays which are multiples of the propagation delays exhibited by the adders in the tree. These delays equalize the signal delays in each of the paths between the coefficient weighting circuits 550 and the output of the final adder 561 of the adder tree. Lowpass filtered samples at the output of adder 561 are latched into an output latch $L_{LP}$ by the $4F_{sc}$ clock signal.

The lowpass filter of Figure 19 exhibits a total propagation delay equal to the time required for signals to be shifted from the input of the first stage $\tau_{11}'''$ to the output of the center stage $\tau_{11}'''$, plus the propagation time of a coefficient weighting circuit, plus the propagation delay of six adders. If the coefficient weighting circuits are assumed to exhibit a propagation delay of 66 nanoseconds and the adders are assumed to provide a delay of 40 nanoseconds each, the time interval required for a signal to appear at the output of adder 561 is approximately 15.37 cycles of the $4F_{sc}$ clock. Therefore, filtered samples will appear at the output of latch $L_{LP}$ sixteen $4F_{sc}$ clock cycles after the corresponding samples are applied to the input of the filter. This delay of the lowpass filter decreases the delay required for delay line 317 to bring the filtered samples into time correspondence with samples produced by the bandpass filter 332. For instance, if comb filtered samples are delayed by forty-three $4F_{sc}$ clock cycles between the input of the bandpass filter 312 and the output of the bandpass filter 332, which was the case in the embodiment of Figures 12 and 14, this delay could be matched by the sixteen cycles of delay of the lowpass filter plus the delay of twenty-seven stages of the shift register of the input bandpass filter 312. In such a configuration, the input of the first stage $\tau_1'''$, of the lowpass filter of Figure 19 would be coupled to the output of the twenty-seventh stage of the bandpass filter shift register (Figure 12), thereby eliminating the need for a separate delay line 317.

Several of the concepts inherent in the present invention are graphically illustrated by the idealized waveforms of Figure 20. The A/D converter produces video signal samples occupying the conventional video band, such as that shown in Figure 20 for an NTSC color signal. The video signal includes luminance (Y) information extending from zero to about 4.2 MHz. I color mixture signal information is interleaved with the luminance information from about 2.1 to 4.2 MHz, and Q color mixture signal information is interleaved over the range from about 3 to 4.2 MHz. In the range from 3 to 4.2 MHz, the color mixture signal information is modulated as double sideband signals of the color subcarrier $f_{sc}$ (3.58 MHz). When the composite video signal is filtered by bandpass filters 312, a passband as shown in Figure 20b results, containing the color mixture signal information between high and low cutoff frequencies $f_H$ and $f_L$.

By reason of the subsampling of the bandpass filtered signals at phases $\phi_1$ and $\phi_2$ of an $f_{sc}$ rate subsampling signal, replicas of the passband of Figure 20b are reproduced about the $f_{sc}$ subsampling frequency and harmonics thereof, several of which are shown in Figure 12c. The lowest frequency replicated band 650 includes demodulated I and Q color mixture signal information by reason of the $f_{sc}$ subcarrier subsampling frequency. The next passband 652 comprises two passbands which overlap or alias between 3 and 4.2 MHz about the $f_{sc}$ frequency. However, by reason of the phase and frequency relationships of the signal components in the overlap region, signal components reinforce one another. No interference components destructive of the color information signals are created by this aliasing. A portion of a third, higher frequency passband 654 is also shown.

The subsampled signals are then comb filtered, which effectively comb filters all of the replicated passbands, as illustrated by Figure 20d. The passband 650' now contains comb filtered and demodulated color mixture signal information. The "teeth" of the comb filter responses are separated by 15,734 Hz intervals, the horizontal line rate, for the NTSC signal.

The output bandpass filter passes that portion of the bands of Figure 20d which are located between cutoff frequencies $f_L$ and $f_H$. This band contains modulated and comb filtered chrominance information. When the signal of this passband are subtracted from the composite signal of Figure 20a, a complementary comb filtered luminance signal is produced as shown in Figure 20e, which is comb filtered over the $f_L$ to $f_H$ frequency band. The output bandpass filter 332 is required to eliminate the signals in the passband 650' of Figure 20d from the chrominance signals which are subtracted from the composite video signal. The combination of signals in passband 650' with the composite video signal, if allowed to occur, would undesirably introduce unwanted signal information into the low frequency region of the luminance signal.

## Claims

1. A television signal processing system, including a source (10) of sampled data video signals at a given data rate having first and second interleaved signal components in a passband and a signal separation system comprising:

means (12), having an input coupled to said signal source, and an output, for passing said sampled data video signals at a reduced data rate which is less than said given data rate over a portion of said passband; and

a comb filter (20), responsive to the output of said reduced data rate signal passing means, and operated at said reduced data rate for producing a comb filtered output signal.

2. The system of claim 1, further including:

an interpolator (16) having an input coupled to receive said comb filtered signal and an output at which a replica of said comb filtered signal is produced at said given data rate; and

means (18), having a first input coupled to said signal source to receive said sampled data video signals, a second input coupled to receive said replica of said comb filtered signal, and an output, for combining said received signals to produce a second comb filtered signal.

3. The system of Claim 1 or 2, wherein said reduced data rate signal passing means comprises:

means (50) for subsampling said video signals at a reduced rate which is less than said given data rate; and

a bandpass filter (60, 70) responsive to said subsampled video signals for passing reduced rate filtered signal samples occupying a portion of said passband.

4 The system of Claim 2, wherein said first and second interleaved signal components comprise chrominance and luminance information signals;

said first-named comb filtered output signal comprises a comb filtered chrominance signal; and wherein said combining means comprises means (18) for subtractively combining said sampled data video signals and said comb filtered chrominance signal to produce a comb filtered luminance signal.

5. The system of claim 1, 2, 3 or 4 wherein said reduced data rate satisfies the Nyquist criterion for sampled signals with respect to at least one of said first and second components.

6. The system of claim 1, wherein one video line interval of the sampled data video signals from said source comprises a given number of signal samples;

said reduced data rate signal passing means (12) operates in response to a subsampling signal; and wherein one video line interval of the output of said reduced data rate signal passing means comprises a reduced number of signal samples which is not an integer submultiple of said given number; and said signal separation system also includes

means (Fig. 9) for changing the phase of said subsampling signal from one video line interval to another.

7. The system of claim 1, for use in a television receiver, wherein said sampled data video signals are developed by apparatus comprising a source of analog video signals occupying a given passband and having first and second frequency interleaved signal components, and an analog to digital converter (10), responsive to a sampling clock signal, for producing a sequence of digital video signal samples in response to said sampling clock signal;

wherein said reduced data rate signal passing means comprises a bandpass filter (12), having an input responsive to said sequence of digital video signal samples, for sampling said sequence at first and second phases of a subsampling clock signal and producing filtered signal samples at a reduced rate relative to said input sequence which occupy a portion of said given passband;

wherein a said comb filter comprises a shift register (22) and a first signal combining circuit (24) responsive to said reduced rate filtered signal samples, said first signal combining circuit being further responsive to delayed filtered signal samples provided by said shift register for producing a first comb filtered signal sequence at said reduced rate at an output which corresponds to said first frequency interleaved signal components;

said signal separation system also including:

an interpolator (16) having an input coupled to the output of said comb filter and responsive to said first comb filtered signal sequence for generating interpolated signals therefrom and producing a replica of said first comb filtered signal sequence at the rate of said input sequence; and

a second signal combining circuit (18) having a first input responsive to said replica of said first comb filtered signal sequence, a second input responsive to said sequence of digital video signal samples produced by said analog to digital converter, and an output at which a second comb filtered signal sequence corresponding to said second interleaved signal components is produced.

8. The system of Claim 7, further comprising:

a second shift register (14), coupled between said analog to digital converter and said second input of said second signal combining circuit for providing an equalizing delay to said sequence of digital video signal samples produced by said analog to digital converter.

9. The system of Claim 7 or 8, wherein said sampling clock signal and said subsampling clock signal are aligned in phase with the color subcarrier of said video signals, said first signal combining circuit is a subtractive signal combining circuit (24) which produces a comb filtered chrominance signal sequence, and said second signal combining circuit is a subtractive signal combining circuit (18) which produces a comb filtered luminance signal sequence.

10. The system of Claim 7 or 8 further comprising:

means (120) for producing a sampling clock signal containing sampling pulses produced at first, second, third and fourth phases of the color subcarrier signal component of said video signals;

wherein said analog to digital converter (10) is responsive to said sampling clock signal; and

means (130, 132) for producing first and second subsampling clock signals containing subsampling pulses corresponding to said first and second phases,

wherein said bandpass filter (12) is responsive to said subsampling clock signals.

11. The system of Claim 10, further comprising means (134) for producing a third subsampling clock signal at a reduced rate relative to said sampling clock signal and in phase alignment therewith,

wherein said comb filter (20) is responsive to said third subsampling clock signal.

12. The system of Claim 10, wherein said means for producing said first and second subsampling clock signals further includes (136, 138) means for producing third and fourth subsampling clock signals containing subsampling pulses corresponding to said third and fourth phases,

wherein said bandpass filter (12') is responsive to said first and second subsampling clock signals during a first video line, and to said third and fourth subsampling clock signals during a second, succeeding video line.

13. The system of claim 1:

wherein said signal passing means includes a first bandpass filter (312) having an input responsive to said sampled data video signals and an output at which filtered signal samples occupying a portion of said video passband are produced at said given data rate; and

means (314, 316) for rendering said comb filter, responsive to only selected ones of said filtered signal samples;

said signal separation system also including:

a second bandpass filter (332) responsive to said comb filtered signal for producing a comb filtered signal at said given data rate which occupies a portion of said video passband.

14. The system of claim 13 additionally comprising:

an interpolator (330) having an input responsive to the output of said comb filter and an output at which a replica of said comb filtered signal is produced at said given data rate; said second bandpass filter being responsive to the output of said interpolator.

15. The system of Claim 13 or 14, further comprising:

means (18), responsive to said comb filtered signal produced by said second bandpass filter and to said video signals provided by said signal source, for combining said signals to produce a second comb filtered signal.

16. The system of claim 13, for use in a television receiver, wherein said sampled data video signals are developed by apparatus comprising a source of analog video signals occupying a given passband and containing first and second frequency interleaved signal components, and an analog to digital converter (10) responsive to said analog video signals for producing a sequence of digitized video signal samples in response to a sampling signal of a given frequency;

wherein said comb filter comprises:

a first comb filter section (320) having an input responsive to selected ones of said filtered video signal samples and an output at which a first sequence of comb filtered signal samples is produced in a first phase relationship with said filtered video signal sample sequence;

a second comb filter section (322) having an input responsive to selected others of said filtered video signal samples and an output at which a second sequence of comb filtered signal samples is produced in a second phase relationship with said filtered video signal sample sequence; and

means (324) for combining said first and second sequences of comb filtered signal samples to produce a first comb filtered signal corresponding to said first interleaved signal components;

and wherein said signal separation system additionally includes a signal combining circuit (18) having a first input responsive to the output of said second bandpass filter a second input responsive to said sequence of digitized video signal samples produced by said analog to digital converter, and an output at which a second comb filtered signal corresponding to said second interleaved signal components is produced.

17. The system of Claim 16, further comprising:

means (120) for producing a sampling clock signal including sampling pulses of first, second, third and fourth phases,

wherein said analog to digital converter (10) and said bandpass filters (312, 332) are responsive to said sampling clock signal,

means (130) for producing a first subsampling clock signal including subsampling pulses corresponding to the first phase of said sampling clock signal,

wherein said first comb filter section (320) is responsive to said first subsampling clock signal for selecting said ones of said filtered video signal samples; and

means (132) for producing a second subsampling clock signal including subsampling pulses corresponding to a second phase of said sampling clock signal,

wherein said second comb filter section (322) is responsive to said second subsampling clock signal for selecting said others of said filtered video signal samples.

18. The system of Claim 17, further including:

means (136) for producing a third subsampling clock signal including subsampling pulses corresponding to a third phase of said sampling clock signal; and

means (138) for producing a fourth subsampling clock signal including subsampling pulses corresponding to a fourth phase of said sampling clock signal;

wherein said comb filter sections are responsive to said first and second subsampling clock signals during a first video line, and to said third and fourth subsampling clock signals during a second, succeeding video line.

19. The system of Claim 16 or 18, wherein said first comb filtered signal comprises a comb filtered chrominance signal; and wherein said signal combining circuit (18) comprises a subtractive signal combining circuit responsive to a replica of said comb filtered chrominance signal and said sequence of digitized video signal samples for producing a comb filtered luminance signal.

20. The system of Claim 16, wherein said first comb filtered signal exhibits a sample rate which is less than said given frequency, and said second bandpass filter (440, 450, 460) is responsive to said first comb filtered signal for interpolating sample values so as to produce said replica of said first comb filtered signal exhibiting a sample rate which is equal to said given frequency.

21. The system of Claim 16 or 20, wherein said first and second bandpass filters exhibit substantially the same passband response characteristic; and further comprising:

an equalizing delay (317) coupled between said analog to digital converter and said second input of said signal combining circuit.

22. The system of claim 1 also including:

a bandpass filter (332) responsive to said comb filtered signal for passing a prescribed spectrum thereof.

23. The system of claim 1, for use in a television signal processing system wherein said frequency interleaved components comprise luminance and chrominance signal components:

wherein said signal passing means comprises a first bandpass filter (312) having an input responsive to said sampled data video signals for producing a sequence of filtered signal samples occupying a portion of said passband; and

wherein said comb filter (20) produces a comb filtered luminance signal at said reduced rate; said signal separation system also including:

a second bandpass filter (332) having an input responsive to said comb filtered luminance signal and an output at which a comb filtered luminance signal is produced at said given data rate which occupies a first portion of said passband; and

means (518), having a first input responsive to said comb filtered luminance signal produced by said second bandpass filter, a second input responsive to sampled data video signals from said source which occupy a second portion of said video passband, and an output for producing a comb filtered luminance signal occupying said video passband.

24. The system of Claim 23, further comprising:

a lowpass filter (513) coupled between said source of sampled data video signals and said second input of said comb filtered luminance signal producing means, said lowpass filter exhibiting a complementary passband response characteristic to that of said second bandpass filter.

25. The system of Claim 23 or 24, wherein said comb filter comprises a shift register (570; 580), an additive combining circuit (578, 588), and a subtractive combining circuit (576, 586), each having an input responsive to selected ones of said filtered signal samples, the output of said shift register being coupled to second inputs of said additive and subtractive combining circuits, said additive combining circuit producing said reduced data comb filtered luminance signal, and said subtractive combining circuit producing a reduced rate comb filtered chrominance signal.

**Patentansprüche**

1. System zur Verarbeitung von Fernsehsignalen mit einer Quelle (10) für Videosignale, die in Form abgefragter Proben mit einer gegebenen Datenrate erscheinen und erste und zweite, miteinander verkämmte Signalkomponenten in einem Durchlaßband haben, und mit einem Signaltrennungssystem, bestehend aus:

einer Einrichtung (12), die einen mit der Signalquelle gekoppelten Eingang hat und einen Ausgang aufweist, um die probenförmigen Videosignale über einen Teil des Durchlaßbandes mit einer verminderten Datenrate durchzulassen, die geringer ist als die gegebene Datenrate;

einem Kammfilter (20), das auf den Ausgang der die Signale mit verminderter Datenrate durchlassenden Einrichtung anspricht und ·mit der verminderten Datenrate arbeitet, um ein kammgefiltertes Ausgangssignal zu erzeugen.

2. System nach Anspruch 1, ferner enthaltend:

einen Interpolator (16), der einen zum Empfang des kammgefilterten Signals angeschlossenen Eingang und einen Ausgang aufweist, an dem eine Nachbildung des kammgefilterten Signals mit der gegebenen Datenrate erzeugt wird;

einer Einrichtung (18), die einen mit der Signalquelle gekoppelten ersten Eingang zum Empfang der probenförmigen Videosignale, einen zum Empfang der Nachbildung des kammgefilterten Signals angeschlossenen zweiten Eingang und einen Ausgang aufweist, um die empfangenen Signale zur Erzeugung eines zweiten kammgefilterten Signals zu kombinieren.

3. System nach Anspruch 1 oder 2, worin die Einrichtung, welche Signale mit verminderter Datenrate durchläßt, folgendes aufweist:

eine Einrichtung (50) zur Unterabtastung der Videosignale mit einer verminderten Rate, die geringer ist als die gegebene Datenrate; und

ein Bandpaßfilter (60, 70), das auf die unterabgetasteten Videosignale anspricht, um gefilterte Signalproben verminderter Datenrate, die einen Teil des Durchlaßbandes belegen, durchzulassen.

4. System nach Anspruch 2, worin die beiden verkämmten Signalkomponenten ein Farbart- und ein Leuchtdichteinformationssignal sind und das erstgenannte kammgefilterte Ausgangssignal ein kammgefiltertes Farbartsignal ist und die vereinigende Einrichtung (18) Mittel zur subtraktiven Vereinigung der probenförmigen Videosignale und des kammgefilterten Farbartsignals aufweist, um ein kammgefiltertes Leuchtdichtesignal zu erzeugen.

5. System nach Anspruch 1, 2, 3 oder 4, worin die verminderte Datenrate dem Nyquist-Kriterium für abgefragte Signale hinsichtlich mindestens einer der ersten und zweiten Komponenten genügt.

6. System nach Anspruch 1, worin

ein Fernsehzeilenintervall der probenförmigen Videosignale aus der Quelle eine gegebene Anzahl von Signalproben aufweist,

die Einrichtung (20), welche Signale mit verminderter Datenrate durchläßt, unter Steuerung durch ein Unterabtastsignal arbeitet,

ein Fernsehzeilenintervall des Ausgangs der Einrichtung, welche Signale mit verminderter Datenrate durchläßt, eine verminderte Anzahl von Signalproben enthält, die nicht ein ganzzahliges Untervielfaches der gegebenen Anzahl ist,

das Signaltrennungssystem außerdem eine Einrichtung (Fig. 9) enthält, um die Phase des Unterabtastsignals von einem Videozeilenintervall zum nächsten zu ändern.

7. System nach Anspruch 2 zur Verwendung in einem Fernsehempfänger,

wobei die probenförmigen Videosignale von einer Einrichtung entwickelt werden, die folgendes aufweist: eine Quelle analoger Videosignale, die ein gegebenes Durchlaßband belegen und erste und zweite, miteinander frequenzverkämmte Signalkomponenten haben, und einen Analog/Digital-Wandler (10), der auf ein Abfragetaktsignal anspricht, um eine Folge digitaler Videosignalproben als Antwort auf das Abfragetaktsignal zu erzeugen;

wobei die Einrichtung, welche Signale mit der verminderten Datenrate durchläßt, ein Bandpaßfilter (12) aufweist, das einen auf die Folge digitaler Videosignalproben ansprechenden Eingang hat, um die Folge mit einer ersten und einer zweiten Phase eines unterabtastenden Taktsignals abzufragen und gefilterte Signalproben mit einer gegenüber der eingangsseitigen Folge verminderten Datenrate zu erzeugen, die einen Teil des gegebenen Durchlaßbandes beleben;

wobei ein Kammfilter ein Schieberegister (22) und eine erste Signalvereinigungsschaltung (24) aufweist, die auf die gefilterten Signalproben verminderter Datenrate ansprechen, wobei die erste Signalvereinigungsschaltung ferner auf verzögerte, vom ersten Schieberegister gelieferte gefilterte Signalproben anspricht, um an einem Ausgang mit der verminderten Datenrate eine erste Kammgefilterte Signalfolge zu erzeugen, die der ersten frequenzverkämmten Signalkomponente entspricht;

wobei das Signaltrennungssystem außerdem folgendes enthält:

einen Interpolator (16), der einen mit dem Ausgang des Kammfilters gekoppelten Eingang hat und auf die erste kammgefilterte Signalfolge anspricht, um daraus interpolierte Signale zu erzeugen und eine Nachbildung der ersten kammgefilterten Signalfolge mit der Rate der eingangsseitigen Folge zu erzeugen, und

eine zweite Signalvereinigungsschaltung (18) mit einem ersten Eingang, der auf die Nachbildung der ersten kammgefilterten Signalfolge anspricht, einem zweiten Eingang, der auf die vom Analog/Digital-Wandler erzeugte Folge digitaler Videosignalproben anspricht, und einem Ausgang, an dem eine zweite kammgefilterte Signalfolge erzeugt wird, die den zweiten verkämmten Signalkomponenten entspricht.

8. System nach Anspruch 7, welches ferner ein zweites Schieberegister (14) aufweist, das zwischen den Analog/Digital-Wandler und den zweiten Eingang der zweiten Signalvereinigungsschaltung gekoppelt ist, um eine ausgleichende Verzögerung für die vom Analog/Digital-Wandler erzeugte Folge digitaler Videosignalproben zu bewirken.

9. System nach Anspruch 7 oder 8, wobei das Abfragetaktsignal und das unterabtastende Taktsignal in ihrer Phase mit dem Farbhilfsträger der Videosignale ausgerichtet sind und wobei die erste Signalvereinigungsschaltung eine subtraktive Signalvereinigungsschaltung (24) ist, die eine kammgefilterte Farbartsignalfolge erzeugt, und wobei die zweite Signalvereinigungsschaltung eine subtraktive Signalvereinigungsschaltung (18) ist, die eine kammgefilterte Leuchtdichtesignalfolge erzeugt.

10. System nach Anspruch 7 oder 8, welches ferner folgendes aufweist:

eine Einrichtung (20) zur Erzeugung eines Abfragetaktsignals, das Abfrageimpulse enthält, die mit einer ersten, einer zweiten, einer dritten und einer vierten Phase der Farbhilfsträgersignalkomponente der Video signale erzeugt werden, wobei der Analog/Digital-Wandler (10) auf das Abfragetaktsignal anspricht;

eine Einrichtung (130, 132) zur Erzeugung erster und zweiter unterabtastender Taktsignale, die Unterabtastimpulse entsprechend der ersten und der zweiten Phase enthalten,

wobei das Bandpaßfilter (12) auf die unterabtastenden Taktsignale anspricht.

11. System nach Anspruch 10, ferner mit einer Einrichtung (134) zur Erzeugung eines dritten unterabtastenden Taktsignals, das eine gegenüber dem Abfragetaktsignal verminderte Rate hat und in Phase damit ausgerichtet ist,

wobei das Kammfilter (20) auf das dritte unterabtastende Taktsignal anspricht.

12. System nach Anspruch 10, wobei die Einrichtung, welche die ersten und zweiten unterabtastenden Taktsignale erzeugt, ferner eine Einrichtung (136, 138) enthält, um dritte und vierte unterabtastende Taktsignale zu erzeugen, die Unterabtastimpulse entsprechend den dritten und vierten Phasen enthalten,

wobei das Bandpaßfilter (12') während einer ersten Fernsehzeile auf das erste und das zweite unterabtastende Taktsignal und während einer zweiten, nachfolgenden Videozeile auf das dritte und das vierte unterabtastende Taktsignal anspricht.

13. System nach Anspruch 1,

wobei die besagte signaldurchlassende Einrichtung ein erstes Bandpaßfilter (312) enthält mit einem auf die probenförmigen Videosignale ansprechenden Eingang und mit einem Ausgang, an dem gefilterte Signalproben mit der gegebenen Datenrate erzeugt werden, die einen Teil des Video-Durchlaßbandes belegen, und eine Einrichtung (314, 316), um das Kammfilter auf nur ausgewählte Exemplare der gefilterten Signalproben ansprechen au lassen;

wobei das Signaltrennungssystem außerdem ein zweites Bandpaßfilter (332) enthält, das auf das kammgefilterte Signal anspricht, um ein kammgefiltertes Signal mit der gegebenen Datenrate zu erzeugen, welches einen Teil des Video-Durchlaßbandes belegt.

14. System nach Anspruch 13, welches zusätzlich einen Interpolator (330) aufweist, der einen auf den Ausgang des Kammfilters ansprechenden Eingang und einen Ausgang hat, wo eine Nachbildung des kammgefilterten Signals mit der gegebenen Datenrate erzeugt wird, wobei das zweite Bandpaßfilter auf den Ausgang des Interpolators anspricht.

15. System nach Anspruch 13 oder 14, welches ferner eine Einrichtung (18) enthält, die auf das vom zweiten Bandpaßfilter erzeugte kammgefilterte Signal und auf die von der Signalquelle gelieferten Videosignale anspricht, um diese Signale zur Erzeugung eines zweiten kammgefilterten Signals zu kombinieren.

16. System nach Anspruch 13 zur Verwendung in einem Fernsehempfänger, worin die probenförmigen Videosignale von einer Einrichtung entwickelt werden, die folgendes aufweist: eine Quelle analoger Videosignale, die ein gegebenes Durchlaßband belegen erste und zweite verkämmte Signalkomponenten enthalten, und einen Analog/Digital-Wandler (10), der auf die analogen Videosignale anspricht, um eine Folge digitalisierter Videosignalproben unter Steuerung durch ein Abfragesignal einer gegebenen Frequenz zu erzeugen;

wobei das Kammfilter folgendes aufweist:

einen ersten Kammfilterabschnitt (320), der einen auf ausgewählte Exemplare der gefilterten Videosignalproben ansprechenden Eingang und einen Ausgang hat, wo eine erste Folge kammgefilterter Signalproben in einer ersten Phasenbeziehung gegenüber der Folge der gefilterten Videosignalproben erzeugt wird;

einen zweiten Kammfilterabschnitt (322) mit einem auf ausgewählte andere Exemplare der gefilterten Videosignalproben ansprechenden Eingang und mit einem Ausgang, wo eine zweite Folge kammgefilterter Signalproben in einer zweiten Phasenbeziehung gegenüber der Folge gefilterter Videosignalproben erzeugt wird; und

eine Einrichtung (324) zum Vereinigen der ersten und der zweiten Folge kammgefilterter Signalproben, um ein erstes kammgefiltertes Signal zu erzeugen, das den ersten verkämmten Signalkomponenten entspricht;

une wobei das Signaltrennungssystem außerdem eine Signalvereinigungsschaltung (18) enthält, die einen auf den Ausgang des zweiten Bandpaßfilters ansprechenden ersten Eingang und einen auf die vom Analog/Digital-Wandler erzeugte Folge digitalisierter Videosignalproben ansprechenden zweiten Eingang und einen Ausgang hat, wo ein zweites kammgefiltertes Signal erzeugt wird, das den zweiten verkämmten Signalkomponenten entspricht.

17. System nach Anspruch 16, welches ferner folgendes aufweist:

eine Einrichtung (120) zur Erzeugung eines Abfragetaktsignals, das Abfrageimpulse einer ersten, einer zweiten, einer dritten und einer vierten Phase enthält,

wobei der Analog/Digital-Wandler (10) und die Bandpaßfilter (312, 332) auf dieses Abfragetaktsignal ansprechen;

eine Einrichtung (130) zur Erzeugung eines ersten unterabtastenden Taktsignals, das Unterabtastimpulse entsprechend der ersten Phase der Abfragetaktsignals enthält,

wobei der erste Kammfilterabschnitt (320) auf das erste unterabtastende Taktsignal anspricht, um die besagten Exemplare der gefilterten Videosignalproben auszuwählen; und

eine Einrichtung (132) zur Erzeugung eines zweiten unterabtastenden Taktsignals, das Unterabtastimpulse entsprechend einer zweiten Phase des Abfragetaktsignals enthält,

wobei der zweite Kammfilterabschnitt (322) auf das zweite unterabtastende Taktsignal anspricht, um die besagten anderen Exemplare der gefilterten Videosignalproben auszuwählen.

18. System nach Anspruch 7, welches ferner folgendes enthält:

eine Einrichtung (136) zur Erzeugung eines dritten unterabtastenden Taktsignals, das Unterabtastimpulse entsprechend einer dritten Phase der Abfragetaktsignals enthält; und

eine Einrichtung (138) zur Erzeugung eines vierten unterabtastenden Taktsignals, das Unterabtastimpulse entsprechend einer vierten Phase des Abfragetaktsignals enthält;

wobei die Kammfilterabschnitte während einer ersten Videozeile auf das erste und das zweite unterabtastende Taktsignal und während einer zweiten, nachfolgenden Videozeile auf das dritte und das vierte unterabtasteende Taktsignal ansprechen.

19. System nach Anspruch 16 oder 18, wobei das erste kammgefilterte Signal ein kammgefiltertes Frabartsignal ist, und wobei die Signalvereinigungsschaltung (18) eine subtraktive Signalvereinigungsschaltung aufweist, die auf eine Nachbildung des kammgefilterten Farbartsignals und die Folge digitalisierter Videosignalproben anspricht, um ein kammgefiltertes Leuchtdichtesignal zu erzeugen.

20. System nach Anspruch 16, wobei das erste kammgefilterte Signal eine Datenrate hat, die geringer ist als die gegebene Frequenz, und wobei das zweite Bandpaßfilter (440, 450, 460) auf das erste kammgefilterte Signal anspricht, um Probenwerte zu interpolieren und damit die erwähnte Nachbildung des kammgefilterten Signals mit einer Abfragerate zu erzeugen, die gleich der gegebenen Frequenz ist.

21. System nach Anspruch 16 oder 20, wobei das erste und das zweite Bandpaßfilter im wesentlichen die gleiche Durchlaßcharakteristik haben, und wobei ferner eine ausgleichende Verzögerung (317) vorgesehen ist, die zwischen den Analog/Digital-Wandler und den zweiten Eingang der Signalvereinigungsschaltung gekoppelt ist.

22. System nach Anspruch 1, welches ferner ein Bandpaßfilter (232) enthält, das auf das kammgefilterte Signal anspricht, um ein vorgeschriebenes Spektrum dieses Signals durchzulassen.

23. System nach Anspruch 1 zur Verwendung in einem System zur Verarbeitung von Fernsehsignalen, worin die frequenzverkämmten Komponenten Leuchtdichte- und Farbartsignalkomponenten sind; wobei die besagte signaldurchlassende Einrichtung ein erstes Bandpaßfilter (312) aufweist, das einen auf die probenförmigen Videosignale ansprechenden Eingang hat, um eine Folge gefilterter Signalproben zu erzeugen, die einen Teil des Durchlaßbandes belegt; und

wobei das Kammfilter (20) ein kammgefiltertes Leuchtdichtesignal mit der verminderten Rate erzeugt; und wobei das Signaltrennungssystem außerdem folgendes enthält:

ein zweites Bandpaßfilter (232) mit einem auf das kammgefilterte Leuchtdichtesignal ansprechenden Eingang und einen Ausgang, wo mit der gegebenen Datenrate ein kammgefiltertes Leuchtdichtesignal erzeugt wird, das einen ersten Teil des Durchlaßbandes belegt;

eine Einrichtung (518), die einen ersten Eingang hat, der auf das vom zweiten Bandpaßfilter erzeugte kammgefilterte Leuchtdichtesignal anspricht, einen zweiten Eingang, der auf probenförmigen Videosignale aus der Quelle anspricht, die einen zweiten Teil des Video-Durchlaßbandes belegen, und einen Ausgang zur Erzeugung eines kammgefilterten Leuchtdichtesignals, welches das Video-Durchlaßband belegt.

24. System nach Anspruch 23, welches ferner ein Tiefpaßfilter (513) aufweist, das zwischen die Quelle probenförmiger Videosignale und den zweiten Eingang das kammgefilterte Leuchtdichtesignal erzeugenden Einrichtung gekoppelt ist und eine Durchlaßcharakteristik hat, die komplementar zu derjenigen des zweiten Bandpaßfilter ist.

25. System nach Anspruch 23 oder 34, wobei das Kammfilter ein Schieberegister (570; 580), eine additive Vereinigungsschaltung (578; 588) und eine subtraktive Vereinigungsschaltung (576; 586) aufweist, deren jede einen auf ausgewählte Exemplare der gefilterten Signalproben ansprechenden Eingang hat, wobei der Ausgang des Schieberegisters mit zweiten Eingängen der additiven und der subtraktiven Vereinigungsschaltung gekoppelt ist und wobei die additive Vereinigungsschaltung gekoppelt ist und wobei die additive Vereinigungsschaltung das mit verminderter Rate auftretende kammgefilterte Leuchtdichtesignal und die subtraktive Vereinigungsschaltung ein mit verminderter Rate auftretendes kammgefiltertes Farbartsignal erzeugt.

**Revendications**

1. Système de traitement de signaux de télévision, comprenant une source (10) de signaux vidéo à données échantillonnées à une fréquence donnée de données, ayant des première et seconde composantes imbriquées du signal dans un système de bande passante et de séparation de signaux comprenant:

Un moyen (12) ayant une entrée reliée à ladite source de signaux, et une sortie, pour laisser passer lesdits signaux vidéo à données échantillonnées à une fréquence réduite de données qui est plus faible que ladite fréquence donnée de données sur une partie de ladite bande passante; et

un filtre en peigne (20) répondant à la sortie dudit moyen laissant passer le signal à la fréquence de données réduite, et fonctionnant à ladite fréquence de données réduite pour produire un signal de sortie filtré en peigne.

2. Système de la revendication 1, comprenant de plus:

un interpolateur (16) ayant une entrée reliée pour recevoir ledit signal filtré en peigne et une sortie à laquelle est produite une réplique dudit signal filtré en peigne à ladite fréquence donnée de données; et

un moyen (18) ayant une première entrée reliée à ladite source de signaux pour recevoir lesdits signaux vidéo à données échantillonnées, une seconde entrée reliée pour recevoir ladite réplique dudit signal filtré en peigne et une sortie pour combiner lesdits signaux reçus pour produire un second signal filtré en peigne.

3. Système de la revendication 1 ou 2 où ledit moyen laissant passer le signal à fréquence de données réduite comprend:

un moyen (50) pour sous-échantillonner lesdits signaux vidéo à une fréquence réduite qui est plus faible que ladite fréquence donnée de données; et

un filtre passe-bande (60, 70) répondant auxdits signaux vidéo sous-échantillonnés pour faire passer les échantillons du signal filtré à fréquence réduite occupant une partie de ladite bande passante.

4. Système de la revendication 2 où lesdits première et seconde composantes imbriquées du signal comprennent les signaux d'information de chrominance et de luminance; ledit premier signal nommé filtré en peigne de sortie comprend un signal filtré en peigne de chrominance; et où ledit moyen de combinaison comprend un moyen (18) pour combiner par soustraction lesdits signaux vidéo de données échantillonnées et ledit signal de chrominance filtré en peigne pour produire un signal filtrée en peigne de luminance.

5. Système de la revendication 1, 2, 3 ou 4 où ladite fréquence de données réduite satisfait au critère de Nyquist pour les signaux échantillonnés par rapport à au moins l'une desdites première et seconde composantes.

6. Système de la revendication 1 où un intervalle d'une ligne vidéo des signaux vidéo à données échantillonnées de ladite source comprend un nombre donné d'échantillons du signal;

ledit moyen (12) laissant passer le signal à la fréquence de données réduite fonctionne en réponse à un signal de sous-échantillonnage; et où un intervalle d'une ligne vidéo de la sortie dudit moyen laissant passer le signal à la fréquence de données réduite comprend un nombre réduit d'échantillons du signal qui n'est pas un sous-multiple entier dudit nombre donné; et ledit système de séparation de signaux comprend également

un moyen (figure 9) pour changer la phase dudit signal de sous-échantillonnage d'un intervalle d'une ligne vidéo à un autre.

7. Système de la revendication 1 à utiliser dans un téléviseur où lesdits signaux vidéo à données échantillonnées sont développés par un appareil comprenant une source de signaux vidéo analogiques occupant une bande passante donnée et ayant des première et seconde composantes du signal à fréquences imbriquées et un convertisseur analogique-numérique (10) répondant à un signal d'horloge d'échantillonnage, pour produire une séquence d'échantillons numériques du signal vidéo en réponse audit signal d'horloge d'échantillonnage;

où ledit moyen lassant passer le signal à fréquence de données réduite comprend un filtre passe-bande (12) ayant une entrée répondant à

ladîte séquence des échantillons du signal vidéo numérique pour échantillonner ladite séquence à des première et seconde phases d'un signal d'horloge de sous-échantillonnage et produire des échantillons filtrés du signal à une fréquence réduite relativement à ladite séquence d'entrée qui occupent une partie de ladite bande passante de données.

où ledit filtre en peigne comprend un registre à décalage (22) et un premier circuit (24) de combinaison de signaux répondant auxdits échantillons du signal filtré à fréquence réduite, ledit premier circuit de combinaison de signaux répondant de plus aux échantillons de signal filtré retardé produit par ledit registre à décalage pour produire une première séquence de signaux filtrés en peigne à ladite fréquence réduite à une sortie qui correspond auxdites premières composantes du signal à fréquences imbriquées;

ledit système de séparation de signaux comprenant également:

un interpolateur (16) ayant une entrée reliée à la sortie dudit filtre en peigne et répondant à ladite première séquence de signaux filtrés en peigne pour en produire des signaux interpolés et produire une réplique de ladite première séquence de signaux filtrés en peigne à la fréquence de ladite séquence d'entrée; et

un second circuit (18) de combinaison de signaux ayant une première entrée répondant à ladite réplique de ladite première séquence de signaux filtrés en peigne, une seconde entrée répondant à ladite séquence d'échantillons du signal vidéo numérique produite par ledit convertisseur analogique-numérique et une sortie à laquelle est produite une seconde séquecce de signaux filtrés en peigne correspondant auxdites secondes composantes imbriquées du signal.

8. Système de la revendication 7 comprenant de plus:

un second registre à décalage (14) relié entre ledit convertisseur analogique-numérique et ladite seconde entrée dudit second circuit de combinaison de signaux pour produire un retard d'équilibrage à ladite séquence d'échantillons du signal vidéo numérique produite par ledit convertisseur analogique-numérique.

9. Système de la revendication 7 ou 8 où ledit signal d'horloge d'échantillonnage et ledit signal d'horloge de sous-échantillonnage sont alignés en phase avec la sous-porteuse couleur desdits signaux vidéo, ledit premier circuit de combinaison de signaux est un circuit de combinaison de signaux par soustraction (24) qui produit une séquence de signaux de chrominance filtrés en peigne et ledit second circuit de combinaison de signaux est un circuit de combinaison de signaux par soustraction (18) qui produit une séquence de signaux de chrominance filtrés en peigne.

10. Système de la revendication 7 ou 8 comprenant de plus:

un moyen (120) pour produire un signal d'horloge d'échantillonnage contenant des impulsions d'échantillonnage produites à des première, seconde, troisième et quatrième phases de la composante du signal de sous-porteuse couleur desdits signaux vidéo;

où ledit convertisseur analogique-numérique (10) répond audit signal d'horloge d'échantillonnage; et

un moyen (130, 132) pour produire des premier et second signaux d'horloge de sous-échantillonnage contenant des impulsions de sous-échantillonnage correspondant auxdites première et seconde phases,

où ledit filtre passe-bande (12) répond auxdits signaux d'horloge de sous-échantillonnage.

11. Système de la revendication 10 comprenant de plus un moyen (134) pour produire un troisième signal d'horloge de sous-échantillonnage à une fréquence réduite relativement audit signal d'hologe d'échantillonnage et an alignement de phases avec lui,

où ledit filtre en peigne (20) répond audit troisième signal d'horloge de sous-échantillonnage.

12. Système de la revendication (10) où ledit moyen pour produire lesdits premier et second signaux d'horloge de sous-échantillonnage comprend de plus (136, 138) un moyen pour produire des troisième et quatrième signaux d'horloge de sous-échantillonnage contenant des impulsions de sous-échantillonnage correspondant auxdites troisième et quatrième phases,

dù ledit filtre passe-bande (12') répond auxdits premier et second signaux d'horloge de sous-échantillonnage pendant une première ligne vidéo et auxdits troisième et quatrième signaux d'horloge de sous-échantillonnage pendant une seconde ligne vidéo suivante.

13. Système de la revendication 1 où ledit moyen laissant passer un signal comprend un premier filtre passebande (312) ayant une entrée répondant auxdits signaux vidéo à données échantillonnées et une sortie à laquelle sont produits des échantillons du signal filtré occupant une partie de ladite bande passante vidéo, à ladite fréquence donnée de données; et

un moyen (314, 316) pour rendre ledit filtre en peigne sensible uniquement à des échantillons choisis du signal filtré;

ledit système de séparation de signaux comprenant également:

un second filtre passe-bande (332) répondant audit signal filtré en peigne pour produire un signal filtré en peigne à ladite fréquence donnée de données qui occupe une partie de ladite bande passante vidéo.

14. Système de la revendication 13 comprenant de plus:

un interpolateur (330) ayant une entrée répondant à la sortie dudit filtre en peigne et une sortie à laquelle est produite une réplique dudit signal filtré en peigne à ladite fréquence de données donnée; ledit second filtre passe-bande répondant à la sortie dudit interpolateur.

15. Système de la revendication 13 ou 14 comprenant de plus:

un moyen (18) répondant audit signal filtré en peigne produit par ledit second filtre passe-bande et auxdits signaux vidéo produits par ladite source de signaux, pour combiner lesdits signaux pour produire un second signal filtré en peigne.

16. Système de la revendication 13 à utiliser dans un téléviseur, où lesdits signaux vidéo à données échantillonnées sont développés par un appareil comprenant une source de signaux vidéo analogiques occupant une bande passante donnée et contenant des première et seconde composantes du signal à fréquences imbriquées, et un convertisseur analogique-numérique (10) répondant auxdits signaux vidéo analogiques pour produire une séquence d'échantillons de signal vidéo sous forme numérique en réponse à un signal d'échantillonnage à une fréquence donnée;

où ledit filtre en peigne comprend:

une première section (320) de filtre en peigne ayant une entrée répondant à des échantillons choisis du signal vidéo filtré et une sortie où est produite une première séquence des échantillons du signal filtré en peigne à une première relation de phase avec ladite séquence d'échantillons du signal vidéo filtré;

une seconde section de filtre en peigne (322) ayant une entrée répondant à d'autres échantillons choisis du signal vidéo filtré et une sortie à laquelle est produite une seconde séquence d'échantillons du signal filtré en peigne à une seconde relation de phase avec ladite séquence d'échantillons du signal vidéo filtré; et

un moyen (324) pour combiner lesdites première et seconde séquences des échantillons du signal filtré en peigne pour produire un premier signal filtré en peigne correspondant auxdites premières composantes imbriquées du signal;

et où ledit système de séparation de signaux comprend de plus un circuit (18) de combinaison de signaux ayant une première entrée répondant à la sortie dudit second filtre passe-bande, une seconde entrée répondant à ladite séquence d'échantillons du signal vidéo sous forme numérique produits par le convertisseur analogique-numérique et une sortie où est produit un second signal filtré en peigne correspondant auxdites secondes composantes imbriquées du signal.

17. Système de la revendication 16 comprenant de plus:

un moyen (120) pour produire un signal d'horloge d'échantillonnage comprenant des impulsions d'échantillonnage à des première, seconde, troisième et quatrième phases, où ledit convertisseur analogique-numérique (10) et lesdits filtres passe-bande (312, 332) répondent audit signal d'horloge d'échantillonnage

un moyen (130) pour produire un premier signal d'horloge de sous-échantillonnage comprenant des impulsions de sous-échantillonage correspondant à la première phase dudit signal d'horloge d'échantillonnage, où ladite première section de filtre en peigne (320) répond audit premier signal d'horloge de sous-échantillonnage pour choisir les premiers de échantillons du signal vidéo filtré; et

un moyen (132) pour produire un second signal d'horloge de sous-échantillonnage comprenant des impulsions de sous-échantillonnage correspondant à une seconde phase dudit signal d'horloge d'échantillonnage,

ù ladite seconde section (322) du filtre en peigne répond audit second signal d'horloge de sous-échantillonnage pour choisir les autres des échantillons du signal vidéo filtré.

18. Système de la revendication 17 comprenant de plus: un moyen (136) pour produire un troisième signal d'horloge de sous-échantillonnage comprenant des impulsions de sous-échantillonnage correspondant à une troisième phase dudit signal d'horloge d'échantillonnage; et

un moyen (138) pour produire un quatrième signal d'horloge de sous-échantillonnage comprenant des impulsions de sous-échantillonnage correspondant à une quatrième phase dudit signal d'horloge d'échantillonnage:

où lesdites sections de filtre en peigne répondent auxdits premier et second signaux d'horloge de sous-échantillonnage pendant une première ligne vidéo et auxdits troisième et quatrième signaux d'horloge de sous-échantillonnage pendant une second ligne vidéo suivante.

19. Système de la revendication 16 ou 18 où ledit premier signal filtré en peigne comprend un signal de chrominance filtré en peigne; et où ledit circuit de combinaison de signaux (18) comprend un circuit de combinaison de signaux par soustraction répondant à une réplique dudit signal de chrominance filtré en peigne et à ladite séquence d'échantillons du signal vidéo sous forme numérique pour produire un signal de luminance filtré en peigne.

20. Système de la revendication 16 où ledit premier signal filtré en peigne présente une fréquence d'échantillonnage qui est inférieure à ladite fréquence donnée, et ledit second filtre passe-bande (440, 450, 460) répond audit premier signal filtré en peigne pour interpoler les valeurs d'échantillons afin de produire ladite réplique dudit premier signal filtré en peigne présentant une fréquence d'échantillonnage qui est égale à ladite fréquence donnée.

21. Système de la revendication 16 ou 20 où lesdits premier et second filtres passe-bande présentent sensiblement la même caractéristique de réponse, et comprenant de plus:

un retard d'équilibrage (317) relié entre ledit convertisseur analogique-numérique et ladite seconde entrée dudit circuit de combinaison de signaux.

22. Système de la revendication 1 comprenant également:

un filtre passe-bande (332) répondant audit signal filtré en peigne pour laisser passer son spectre prescrit.

23. Système de la revendication 1 à utiliser dans un système de traitement de signaux de télévision où lesdites composantes à fréquences imbriquées comprennent les composantes des signaux de luminance et de chrominance:

où ledit moyen laissant passer les signaux comprend un premier filtre passe-bande (312) ayant une entrée répondant auxdits signaux vidéo à données échantillonnées pour produire une séquence d'échantillons du signal filtré occupant une partie de ladite bande passante; et

où ledit filtre en peigne (20) produit un signal de luminance filtré en peigne à ladite fréquence réduite: ledit système de séparation de signaux comprenant également:

un second filtre passe-bande (332) ayant une entrée répondant audit signal de luminance filtré en peigne et une sortie à laquelle est produit un signal de luminance filtré en peigne à ladite fréquence donnée de données qui occupe une première partie de ladite bande passante; et

un moyen (518) ayant une première entrée répondant audit signal de luminance filtré en peigne produit par ledit second filtre passe-bande, une seconde entrée répondant auxdits signaux vidéo à données échantillonnées de ladite source qui occupent une seconde partie de ladite bande passante vidéo et une sortie pour produire un signal filtré en peigne de luminance occupant ladite bande passante vidéo.

24. Système de la revendication 23 comprenant de plus:

un filtre passe-bas (513) relié entre ladite source de signaux vidéo à données échantillonnées et ladite seconde entrée dudit moyen produisant un signal de luminance filtré en peigne, ledit filtre passe-bas présentant une caractéristique de réponse complémentaire à celle dudit second filtre passe-bande.

25. Système de la revendication 23 ou 24 où ledit filtre en peigne comprend un registre à décalage (570; 580), un circuit de combinaison par addition (577; 588) et un circuit de combinaison par soustraction (576; 586), chacun ayant une entrée répondant à des échantillons choisis du signal filtré, la sortie dudit registre à décalage étant reliée à des secondes entrées desdits circuits de combinaison par addition et par soustraction, ledit circuit de combinaison par addition produisant ledit signal de luminance filtré en peigne à données réduites et ledit circuit de combinaison par soustraction produisant un signal de chrominance filtré en peigne à données réduites.

Fig.1

Fig. 2

VIDEO FROM A/D CONVERTER

$4F_{SC}$

$\tau_1$, $\tau_2$, $\tau_3$, $\tau_4$, $\tau_5$, $\tau_6$, $\tau_7$, $\tau_8$

TO $\tau 9$

I/Q CLOCK$_S$

$I_F$, $Q_F$ FILTERED SIGNAL

I/Q CLOCK$_F$

2

**Fig.3a**

**Fig.3b**

$C1, C3 = \frac{1}{8}$

$C2 = \frac{3}{16}$

$C4, C7 = \frac{3}{64}$

$C5, C6 = \frac{-7}{64}$

$C8, C9 = \frac{-15}{64}$

| STAGE | P1 | P2 | P3 | P4 | P5 | | M1 | M2 | M3 | M4 | M5 | TIME |
|-------|----|----|----|----|----|--|----|----|----|----|----|------|
| | $I_3$ | $Q_2$ | $I_2$ | $Q_1$ | $I_1$ | | $-Q_2$ | $-I_2$ | $-Q_1$ | $-I_1$ | $-Q_0$ | T1 |
| | $Q_3$ | $I_3$ | $Q_2$ | $I_2$ | $Q_1$ | | $-I_3$ | $-Q_2$ | $-I_2$ | $-Q_1$ | $-I_1$ | T2 |
| COEFF. | C1 | C4 | C2 | C5 | C3 | | C6 | C8 | C7 | C9 | | |
| | C1 | C6 | C2 | C7 | C3 | | | C8 | C4 | C9 | C5 | T2 |

0 100 679

$I_F, Q_F$

FILTERED SIGNAL

$\underline{22}$

$\tau_{C1}$ $\tau_{C2}$ $\tau_{C3}$ $\tau_{C4}$ $\tau_{C5}$ $\tau_{C6}$ ----- $\tau_{C452}$ $\tau_{C453}$ $\tau_{C454}$

I/Q CLOCK$_F$

$\underline{20}$

26

CI = '1'

$\underline{24}$

28

$L_{CF}$

$I_{CF}, Q_{CF}$
COMBED CHROMINANCE

I/Q CLOCK

*Fig. 4*

Fig.5

a    $\bar{I}_1$ $Q_1$ $-\bar{I}_1$ $-Q_1$ $I_2$ $Q_2$ $-I_2$ $-Q_2$ $I_3$ $Q_3$ $-I_3$ $-Q_3$ $I_4$ $Q_4$ $-I_4$ $-Q_4$ $I_5$ $Q_5$ $-I_5$ $-Q_5$ $I_6$ $Q_6$    SHIFT REGISTER 30

$t_1$ $t_3$ $t_5$ $t_6$ $t_7$ $t_9$   $t_{10}$   $t_{12}$ $t_{14}$ $t_{16}$ $t_{18}$

b    $I_1$   $I_2$   $I_3$   $I_4$   $I_5$    $L_{I5}$ LATCH

$t_{1.5}$   $t_{7.5}$

c    $Q_1$   $Q_2$   $Q_3$   $Q_4$   $-Q_5$    $L_{Q5}$ LATCH

$t_{3.5}$   $t_{9.5}$

d    $\bar{I}_1$ $Q_1$ $I_2$ $Q_2$ $I_3$ $Q_3$ $I_4$ $Q_4$ $I_5$ $Q_5$    MULTIPLEXER 50

$t_3$ $t_6$ $t_9$ $t_{10}$ $t_{12}$

e    $\bar{I}_{1F}$ $Q_{1F}$ $I_{2F}$ $Q_{2F}$ $I_{3F}$ $Q_{3F}$ $I_{4F}$ $Q_{4F}$    $L_{\Sigma}$ LATCH

$t_9$ $t_{10}$ $t_{12}$

f    $\bar{I}_{0CF}$ $Q_{0CF}$ $\bar{I}_{1CF}$ $Q_{1CF}$ $I_{2CF}$ $Q_{2CF}$ $I_{3CF}$ $Q_{3CF}$ $I_{40F}$ $Q_{4CF}$    $L_{CF}$ LATCH

$t_{10}$ $t_{12}$ $t_{16}$

g    $-I_1$ $-Q_1$ $-I_2$ $-Q_2$ $-I_3$ $-Q_3$ $-I_4$ $-Q_4$

$t_{12}$ $t_{16}$

h    $I_2$ $Q_2$ $-I_2$ $-Q_2$ $I_3$ $Q_3$ $-I_3$ $-Q_3$ $I_4$ $Q_4$ $-I_4$ $-Q_4$

$I_1$ $Q_1$ $-I_1$ $-Q_1$

$t_{11}$ $t_{13}$ $t_{15}$ $t_{17}$

INTERPOLATOR

i    $I_1$ $Q_1$ $-I_1$ $-Q_1$ $I_2$ $Q_2$ $-I_2$ $-Q_2$ $I_3$ $Q_3$ $-I_3$ $-Q_3$ $I_4$

$t_{12}$ $t_{14}$ $t_{16}$ $t_{18}$

*Fig.6*

0 100 679

Fig. 7

0 100 679

Fig.8

0 100 679

Fig.9

0 100 679

Fig.10

Fig. 11.

0 100 679

Fig. 12a

Fig. 12b

0 100 679

Fig. 13.

Fig. 14

0 100 679

Fig.15.

0 100 679

| 904 | 905 | 906 | 907 | 908 | 909 | 910 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|---|---|---|---|---|
| -Q | +I | +Q | -I | -Q | +I | +Q | -I | -Q | +I | +Q | -I | -Q | +I | +Q | -I | -Q | +I | +Q | -I | -Q | +I | +Q |

a

b    500    $F_{SC}$

c    $I_C$

d    $Q_C$

e    $-I_C$

f    $-Q_C$

g    H. BLANKING

$t_1$

502    LINE

h

$t_2$

i    $t_3$

j    504

$t_2$  $t_3$

k

| 904 | 905 | 906 | 907 | 908 | 909 |
|---|---|---|---|---|---|
| -Q | +I | +Q | -I | -Q | +I |

m    $LINE_F$

Fig. 16.

0 100 679

Fig.17.

Fig.20.

Fig. 18.

Fig. 19.

0 100 679